# EUROPÄISCHE PATENTSCHRIFT

(11) **EP 3 253 982 B1**
(45) Veröffentlichungstag und Bekanntmachung des Hinweises auf die Patenterteilung: **23.10.2019**
(21) Anmeldenummer: 16709973.8
(22) Anmeldetag: 05.02.2016
(51) Int. Cl.: F16D 28/00, F16D 48/02

(54) **KUPPLUNGSBETÄTIGUNGSVORRICHTUNG UND VERFAHREN ZUR BETÄTIGUNG EINER SOLCHEN**
CLUTCH ACTUATING DEVICE AND METHOD FOR ACTUATING SUCH A CLUTCH
DISPOSITIF DE COMMANDE D'EMBRAYAGE ET PROCÉDÉ DE COMMANDE D'UN TEL DISPOSITIF

(30) Priorität: 06.02.2015 DE 102015202190; 01.06.2015 DE 102015210033
(43) Veröffentlichungstag der Anmeldung: 13.12.2017
(73) Patentinhaber: Schaeffler Technologies AG & Co. KG, 91074 Herzogenaurach (DE)
(72) Erfinder: MALITOURNE, Jerome, 67410 Drusenheim (FR)
(86) Internationale Anmeldenummer: PCT/DE2016/200075
(87) Internationale Veröffentlichungsnummer: WO 2016/124196

(56) Entgegenhaltungen:
- EP-A2- 1 927 777
- JP-A- 2014 202 238

## Beschreibung

Die Erfindung betrifft eine Kupplungsbetätigungsvorrichtung, insbesondere ein Ausrücksystem für eine Reibungskupplung eines Kraftfahrzeugs, sowie ein Verfahren zur Betätigung einer solchen Kupplungsbetätigungsvorrichtung. Solche Kupplungsbetätigungseinrichtung sind beispielsweise aus den Druckschrifen EP 1 927 777 A2 oder JP 2014 202238 A bekannt.

Eine hydraulische Kupplungsbetätigung einer Reibungskupplung wird üblicherweise mittels einer Kupplungsbetätigungsvorrichtung im Antriebsstrang eines Kraftfahrzeuges durchgeführt. Bekannt ist, dass mittels der hydraulischen Kupplungsbetätigungsvorrichtung mit einem Geberzylinder und einem Nehmerzylinder unter Verwendung mechanischer Komponenten, wie beispielsweise einem Ausrücklager und einer Kupplungstellerfeder, die Reibungskupplung betätigt werden kann. Typischerweise wird der Nehmerzylinder durch den Geberzylinder betätigt, wobei die Druckkammern des Nehmerzylinders und des Geberzylinders über eine hydraulische Druckleitung miteinander verbunden sind. Ein Kolben des Geberzylinders wird typischerweise durch ein Pedal, beispielsweise ein Fußpedal, mit einer Druckkraft beaufschlagt. Diese Drucckraft erzeugt einen hydraulischen Druck in der Kupplungsbetätigungsvorrichtung, mit dem der Nehmerzylinder und schließlich die Reibungskupplung betätigt werden.

Zur Erhöhung des Fahrkomforts ist es bekannt, die Reibungskupplung automatisch zu betätigen, indem das Kupplungspedal weggelassen wird und ein Automatikgetriebe für den Antriebsstrang des Kraftfahrzeuges vorgesehen wird. Jedoch kann es vom Fahrer gewünscht sein, selbst zu kuppeln und/oder selbst zu schalten und dies nicht einem Automatiksystem zu überlassen.

Hiervon ausgehend liegt der vorliegenden Erfindung die Aufgabe zugrunde, die aus dem Stand der Technik bekannten Nachteile zumindest teilweise zu überwinden und insbesondere Maßnahmen aufzuzeigen, die ein komfortableres Schalten eines Handschaltgetriebes ermöglichen ohne dem Fahrer des Kraftfahrzeuges die Möglichkeit zum eigenen Eingreifen zu nehmen. Es soll insbesondere eine Kupplungsbetätigungsvorrichtung angegeben werden, die durch den Fahrer anwählbar ist oder die selbsttätig Kupplungsvorgänge übernimmt. Dabei soll insbesondere zu jedem Zeitpunkt eine manuelle Betätigung der Kupplung möglich sein und dem Fahrer eine eindeutige Rückmeldung über den aktuellen Betriebszustand der Kupplungsbetätigungsvorrichtung gegeben werden.

Die Aufgabe wird durch die Merkmale der unabhängigen Patentansprüche gelöst. Vorteilhafte Weiterbildungen sind Gegenstand der abhängigen Patentansprüche.

Die erfindungsgemäße Kupplungsbetätigungsvorrichtung, insbesondere ein Ausrücksystem für eine Reibungskupplung eines Kraftfahrzeugs, weist einen Geberzylinder und einen Nehmerzylinder auf sowie einem Aktor über den Geberzylinder und Nehmerzylinder mit einer Druckleitung verbunden sind, wobei der Aktor eine durch einen Motor rotierbare Welle aufweist mit mindestens einem auf der Welle axial beweglich angeordneten Kolben in Form eines Kolbennehmers und einem zweiten darauf beweglich angeordneten Kolben in Form eines schwimmenden Kolbens, die in einem gemeinsamen Zylinder entlang der axialen Richtung verfahrbar sind, wobei eine hintere Druckkammer bzw. Speicherkammer zwischen dem Kolbennehmer und schwimmendem Kolben gebildet werden kann und eine vordere Druckkammer zwischen dem schwimmendem Kolben und einer Stirnwand des Zylinders angeordnet ist; wobei eine erste Feder den schwimmenden Kolben und die Stirnwand verbindet, wobei ein erster Anschluss für eine erste Druckleitung zum Geberzylinder in die hintere Druckkammer mündet, wenn sich der schwimmende Kolben in einer betätigten Position befindet während sich der Kolbennehmer in einer unbetätigten Position befindet und ein zweiter Anschluss für eine zweite Druckleitung zum Nehmerzylinder in die vordere Drucckammer mündet, wobei die erste Druckleitung durch den schwimmenden Kolben verschließbar bzw. verschlossen ist, wenn sich dieser in einer unbetätigten Position befindet.

Die Kupplungsbetätigungsvorrichtung wird insbesondere mit einem Fluid betätigt, welches im Folgenden auch als Hydraulikflüssigkeit bezeichnet wird. Insbesondere handelt es sich um ein Hydrauliköl. Das Fluid ist im wesentlichen inkompressibel.

Durch die Verwendung eines schwimmenden Kolbens mit einer vollen hydraulischen Fläche zur Betätigung eines Nehmerzylinders ist die Nutzung nur einer einzigen Lippendichtung am schwimmenden Kolben möglich statt zweier Dichtungen. Zudem kann durch den Einsatz der verschiedenen Federn eine Kennlinie der Kupplungsbetätigungsvorrichtung erreicht werden, die im Folgenden als Speicherkammerkennlinie bezeichnet wird, die dem Fahrer beim Betätigen des Kupplung eine haptische Rückmeldung über den Geberzylinder und das Kupplungspedal über den jeweiligen Betriebspunkt der Kupplungsbetätigungsvorrichtung gibt, insbesondere also ob es bereits eine Aktorbetätigung der Kupplung gegeben hat oder nicht.

Unter einer Kupplung wird insbesondere eine Reibkupplung zur lösbaren Übertragung von Drehmoment von einem Motor auf einen Antriebsstrang verstanden, insbesondere in einem entsprechenden Automobil.

Gemäß einer vorteilhaften Ausgestaltung der Kupplungsbetätigungsvorrichtung ist eine zweite Feder zwischen einem Gehäuse des Kolbennehmers und einem hinteren Anschlag des Kolbennehmers angeordnet.

Gemäß einer vorteilhaften Ausgestaltung der Kupplungsbetätigungsvorrichtung ist ein dritter Druckraum als Fluidreservoir zwischen der zweiten Feder und dem Gehäuse des Kolbennehmers ausgebildet, wobei das Fluidreservoir in einer betätigten Position des schwimmenden Kolbens mit der ersten Druckleitung verbunden ist und geeignet ist Fluid bei Betätigung des Geberzylinders aus der ersten Druckleitung aufzunehmen.

Eine vorteilhafte Ausgestaltung der Kupplungsbetätigungsvorrichtung weist eine Verbindung durch den hinteren Druckraum und das Fluidreservoir auf, die fluidisch geöffnet ist, wenn sich der schwimmende Kolben in einer betätigten Position und der Kolbennehmer in einer unbetätigten Position befindet oder von einer betätigten Position in eine unbetätigte Position verlagert wird.

Hinterer Druckraum und dritter Druckraum weisen im Betrieb bevorzugt identische Druckverhältnisse auf. Insbesondere wird dies durch eine Öffnung zwischen drittem Druckraum und hinterem Druckraum erreicht. In vorteilhafter Weise kann diese Öffnung klein ausgebildet werden, beispielsweise mit einem größten Durchmesser von weniger als 0,5 mm [Millimeter], insbesondere weniger als 0,3 mm.

Gemäß einer vorteilhaften Ausgestaltung der Kupplungsbetätigungsvorrichtung weist eine dritte Feder zwischen der zweiten Feder und dem Fluidreservoir auf, wobei die dritte Feder eine kleinere Federkonstante als die zweite Feder aufweist und bei einem Eintritt von Fluid in das Fluidreservoir vor der zweiten Feder ausgelenkt wird, so dass ein erster Druckwiderstand am Kupplungspedal des Geberzylinders für einen Fahrer spürbar wird und bei einer anschließenden weiteren Auslenkung der zweiten Feder oder eines Zwischenelements wenigstens ein zweiter Druckwiderstand spürbar ist, welcher vom ersten verschieden ist, so dass der Fahrer durch die unterschiedlichen Druckwiderstände erkennt, dass sich der schwimmende Kolben in einer betätigten Position befindet.

Unter dem Fahrer wird insbesondere der Bediener der Kupplungsbetätigungsvorrichtung verstanden.

Gemäß einem weiteren Aspekt der Erfindung wird ein Verfahren zur Betätigung einer Kupplungsvorrichtung mit einem hydraulisch wirkenden Nehmerzylinder vorgeschlagen, der wahlweise durch einen hydraulisch verbundenen manuell betätigten Geberzylinder oder einen motorisch betriebenen Aktor betätigt wird. Das Verfahren zeichnet sich dadurch aus, dass bei einer gleichzeitigen manuellen und motorischen Betätigung ein manuell druckbeaufschlagter Anteil eines Fluids in eine volumenveränderliche Speicherkammer umgeleitet wird.

Gemäß einer vorteilhaften Ausgestaltung des Verfahrens weist die Speicherkammer bei einer Zuleitung des manuell druckbeaufschlagten Fluids eine erste manuelle Kennlinie (auch Druckanstiegskennline) auf, die von einer zweiten manuellen Kennlinie, welche bei einer ausschließlich manuellen Betätigung der Kupplungsbetätigungsvorrichtung ohne Umleitung von Fluid in die Speicherkammer eingehalten wird, abweicht.

Gemäß einer vorteilhaften Ausgestaltung des Verfahrens verläuft die erste manuelle Kennlinie unterhalb der zweiten manuellen Kennlinie.

Die Position des schwimmenden Kolben relativ zum hydraulischen Eingang des pedalbetätigten Geberzylinder liegt vorteilhafterweise in Richtung der vom Antriebsmotor der Spindel abgewandten Seiten, damit eine direkte Verschiebung des vom Geberzylinder verdrängten Volumens in Richtung des Nehmerzylinders (CSC concentric slave cylinder/Zentralausrücker) möglich ist, wenn der Aktor in einer ersten Position 0 liegt. Hierdurch wird eine nur geringe Volumenaufnahme des Fluids durch den Aktor ermöglicht. Die Position 0 entspricht dabei einem Zustand, in dem sowohl der schwimmende Kolben, als auch der Kolbennehmer des Aktors unbetätigt sind. Eine optionale Speicherkammer, d.h. ein entsprechendes Fluidreservoir kann alternativ auch zwischen dem schwimmende Kolben und dem Kolbennehmer auf der Spindel liegen.

Generell kann mit unterschiedlichen Speicherkammerkennlinien die Funktionalität flexibler gestaltet werden. Unter einer Speicherkammerkennlinie wird die Druckkennlinie des Geberzylinders verstanden, wie sie durch einen Fahrer beim Betätigen des Kupplungspedals feststellbar ist. Diese Speicherkammerkennlinie wird durch eine Rückwirkung des Fluidreservoirs auf den inneren Druck der hinteren Druckkammer vorgegeben, d.h. durch eine entsprechende Gestaltung des Fluidreservoirs, bspw. unter Verwendung einer oder mehrerer Federn auch unterschiedlicher Art, insbesondere mit unterschiedlichen Federkonstanten, oder anderer elastischer Elemente kann der Druck im Fluidreservoir und damit auch in der hinteren Druckkammer in Abhängigkeit vom Füllstand bzw. Fluidvolumen im Fluidreservoir entsprechend gesteuert werden. Auf diese Weise können unterschiedliche Zustände des Kupplungsbetätigungssystems durch einen Fahrer zuverlässig erkannt werden.

Um eine spezielle Speicherkammerkennlinie (zuerst weich dann steif) für den Fahrer erkennbar abzubilden und dieses insbesondere ohne größeren Verlust von Fluid in der hydraulischen Kette zu realisieren, ist in einer bevorzugten Ausführungsform der Erfindung vorgesehen, dass zwischen dem Fluidreservoir und einem hinteren Anschlag in Richtung eines motorischen Aktorantriebs wenigstens eine Feder, bevorzugt zwei oder mehr Federn vorgesehen sind, die entsprechende Druckkräfte in Abhängigkeit von ihrer Auslenkung auf das Fluid und damit auf das Kupplungspedal ausüben.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Gleiche Bezugszeichen bezeichnen gleiche Gegenstände. Es zeigen:
- Fig. 1:: eine Kupplungsbetätigungsvorrichtung mit einem in der hydraulischen Strecke angeordneten Aktor;
- Fig. 2:: den Aktor nach Fig. 1 in einer teilweise geschnittenen perspektivischen Ansicht;
- Fig. 3:: einen axialen Längsschnitt durch den Aktor nach Fig. 2;
- Fig. 4:: einen perspektivischen Schnitt durch den schwimmenden Kolben gemäß Fig. 3;
- Fig. 5:: den symbolischen Aufbau des Aktors nach Fig. 3;
- Fig. 6:: eine manuelle Kupplungsbetätigung mit dem Aktor nach Fig. 5
- Fig. 7:: eine motorische Betätigung durch den Aktor nach Fig. 5 beim "Segeln",
- Fig.8:: eine manuelle Betätigung des motorisch betätigten Aktors nach Fig.5,
- Fig. 9:: eine Kupplungsbetätigungsvorrichtung mit Aktor mit Speicherkammerkennlinie,
- Fig.10:: eine zweite Ausführungsform eines Aktors in einer teilweise geschnittenen perspektivischen Ansicht;
- Fig. 11:: einen axialen Längsschnitt durch den Aktor nach Fig. 10;
- Fig. 12:: Schnitt durch den schwimmenden Kolben nach Fig. 11;
- Fig. 13:: eine Speicherkammerkennlinie des Aktors nach Fig.9;
- Fig. 14-17:: eine Darstellung der manuellen Betätigung mit Betriebszustand- und Speicherkammerdruckdarstellung;
- Fig. 18-20:: eine Darstellung einer rein aktorischen Betätigung mit Betriebszustand- und Speicherkammerdruckdarstellung;
- Fig. 21-27:: eine aktorische Betätigung mit anschließender manueller Betätigung mit Betriebszustand- und Speicherkammerdruckdarstellung; und
- Fig. 28-37:: eine aktorische Betätigung mit anhaltender späterer manueller Betätigung mit Betriebszustand- und Speicherkammerdruckdarstellung.

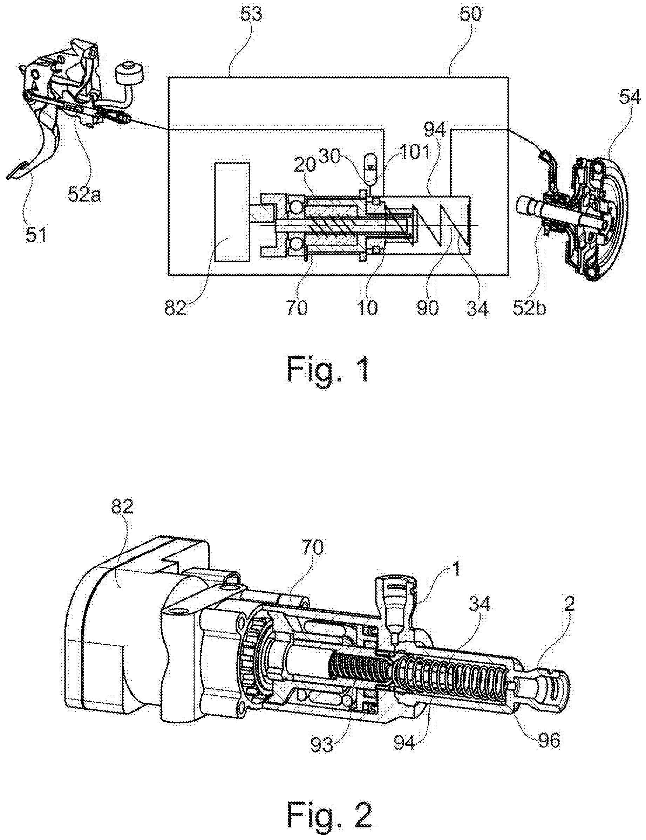

Die Figur 1 zeigt eine Kupplungsbetätigungsvorrichtung 50 mit einem Kupplungspedal 51 und einem Geberzylinder 52a. Über eine hydraulische Strecke 53 kann eine Kupplung 54 betätigt werden. Bei der dargestellten Kupplung 54 kann es sich beispielsweise um eine bekannte Reibkupplung, wie etwa einen Einscheibentrockenreibkupplung handeln, die mittels eines Nehmerzylinders 52b geöffnet bzw. geschlossen werden kann.

In der hydraulischen Strecke 53 ist ein Aktor 70 zwischengeschaltet. Der Aktor 70 umfasst einen Kolbennehmer 20 und einen schwimmenden Kolben 10. Beide sind in einem Zylinder 94 in axialer Richtung 90 beweglich geführt. Zwischen dem Kolbennehmer 20 und dem schwimmenden Kolben 10 ist ein Fluidreservoir 30 eingebunden. Das nach außen abgeschlossene hydraulische System ist mit einem Fluid 101 gefüllt. Das Fluid 101 wird auch als Hydraulikflüssigkeit bezeichnet und ist im Wesentlichen inkompressibel. Die Kupplungsbetätigungsvorrichtung 50 kann wahlweise über das Kupplungspedal 54, den Aktor 70 oder durch beide Mittel gleichzeitig betätigt werden. Sie erlaubt somit eine Kupplungsbetätigung einerseits durch den Fahrer und andererseits eine automatische oder motorische Betätigung. Bei der motorischen Betätigung treibt ein Motor 82 eine Welle 93 an, welche die Drehbewegung über eine Gewindespindel in eine axiale Längsbewegung umsetzt.

Die Fig. 2 zeigt den Aktor 70 nach Figur 1 in einer perspektivischen und teilweise geschnittenen Ansicht.

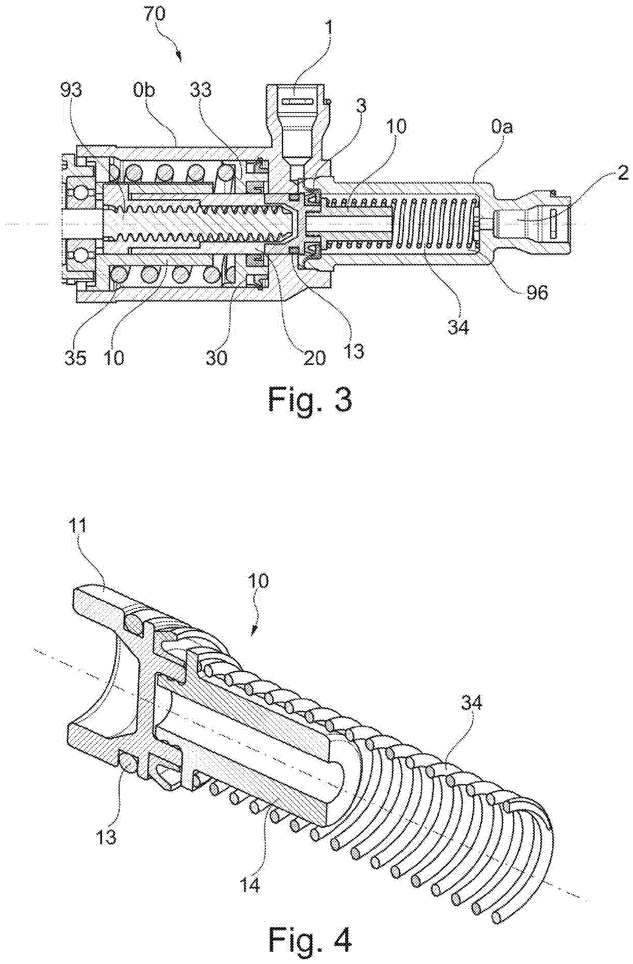

Die Figur 3 zeigt den Aktor 70 nach Figur 1 in einer axialen Schnittansicht und die Figur 4 den entsprechenden schwimmenden Kolben 10 mit einer ersten Feder 34 in einer Schrägansicht. Die Kupplungsbetätigungsvorrichtung 50 erlaubt dabei die Betätigung der Kupplung, das heißt die Versorgung des Nehmerzylinders 52b mit Fluid 101 sowohl direkt vom Nehmerzylinder 52a über eine Betätigung des Kupplungspedals als auch durch den Aktor 70. Der schwimmende Kolben 10 wird bei einer Betätigung durch den Aktor 70 vom Kolbennehmer 20 angetrieben, der wiederum durch eine Rotation der Welle 93 axial angetrieben wird. Wird also der Aktor 70 durch den Motor 82 angetrieben (vgl. Fig. 2), wird der Kolbennehmer 20 in Fig. 2 nach rechts bewegt und dadurch der schwimmende Kolben 10 gegen eine erste Feder 34 bewegt. Dadurch wird das in einem vorderen Druckraum 96 befindliche Fluid 101 durch den zweiten Anschluss 2 hin zum Nehmerzylinder 52b gedrückt, der dadurch betätigt wird. Hierdurch wird die Kupplung 54 betätigt. Dies wird als Aktorbetätigung der Kupplungsbetätigungsvorrichtung 50 bezeichnet. Weitere Details zur Aktorbetätigung werden im weiteren Verlauf offenbart.

Der Geberzylinder 52a des Kupplungspedals 51 ist über eine erste Druckleitung 80 am Anschluss 1 und der Nehmerzylinder 52b (CSC, concentric slave cylinder/Zentralausrücker) für die Kupplungsausrückung ist mittels einer zweiten Druckleitung 81 am Anschluss 2 des Aktors 70 angebunden. Auf diese Weise können herkömmliche bekannte Aktoren mit Schnüffelnut 3 auf einfache Weise in diese hydraulische Strecke eingebunden werden.

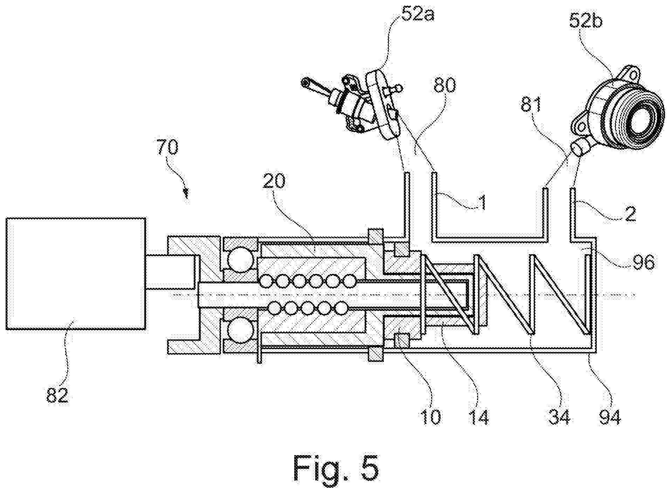

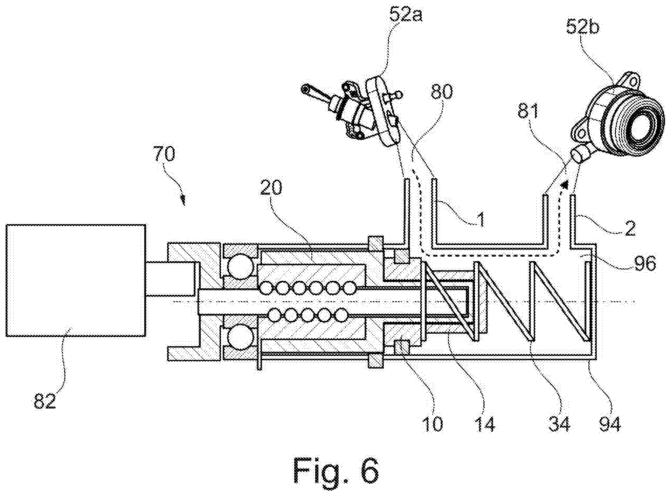

Wenn nun der Fahrer das Kupplungspedal 51 betätigt, wird das Fluid 101 auf direktem Weg vom Anschluss 1 über die Schnüffelnut 3 zum Anschluss 2 gedrückt. Dies ist insbesondere in den Figuren 5 und 6 gezeigt. Dies wird als Fahrerbetätigung bezeichnet.

Ein Abdichtungselement (zum Beispiel ein O-Ring) 13 ermöglicht beim Kolbenweg 0, d.h. in seiner unbetätigten Ausgangslage, wie sie insbesondere Fig. 3 zeigt, eine Abdichtung gegen das Gehäuse 0b. In dieser Position bei unbetätigtem Kolbennehmer 20 ist so die Speicherkammer bzw. das Fluidreservoir 30 geschlossen. Dies ist beispielsweise in Fig. 3 gezeigt. Diese Anordnung ermöglicht eine reduzierte Volumenaufnahme an Fluid 101 in der Phase der ausschließlichen Betätigung durch den Fahrer, wobei der Motor 82 des Aktors 70 nicht betätigt und damit der Kolbennehmer 20 nicht bewegt wird. Durch das Abdichtelement 13 wird in diesem Zustand verhindert, dass über das Kupplungspedal 51 und den Geberzylinder 52a mit Druck beaufschlagtes Fluid 101 über den Zylinder 94 in das innerhalb oder außerhalb des Zylinders 94 angeordnete Fluidreservoir 30 strömen kann, so dass eine ausschließliche Strömung in Richtung des zweiten Anschlusses 2 gewährleistet werden kann, so dass ein zuverlässiges Ein- beziehungsweise Ausrücken der Kupplung 54 gewährleistet werden kann.

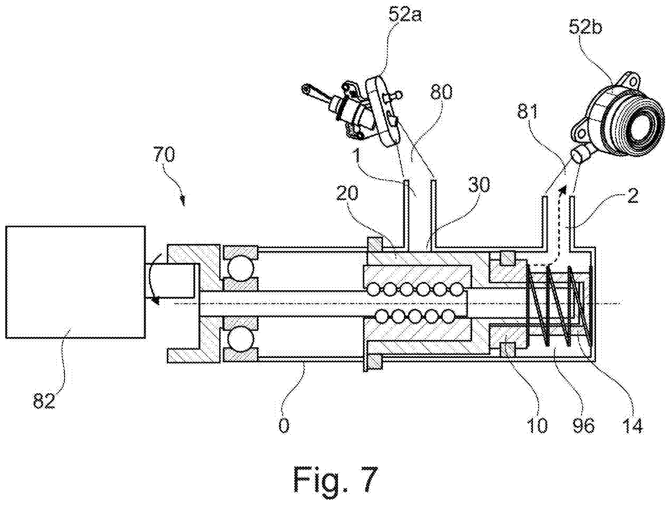

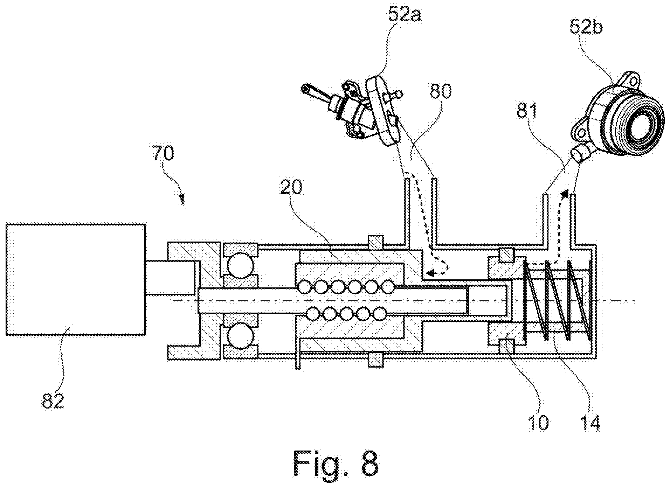

Die Figuren 7 und 8 zeigen grundsätzlich das Prinzip des Einsatzes eines schwimmenden Kolbens in einem Zustand bei einer kombinierten Betätigung durch den Aktor 70 und manuell durch den Fahrer. Die Figuren 5 bis 8 zeigen insbesondere schematisch die Trennung des schwimmenden Kolbens 10 von dem Kolbennehmer 20, so dass in diesen Figuren auf einige Details verzichtet wurde, die in den folgenden Figuren gezeigt werden. Erfolgt die Fahrerbetätigung nach der Aktorbetätigung, so ist der erste Anschluß 1 nicht mehr mit der ursprünglichen vorderen Kammer 96 (zwischen Kolben 10 und Anschluß 2) verbunden, sondern mit einer Speicherkammer bzw. einem Fluidreservoir 30. Dieses Fluidreservoir 30 ist beispielsweise zwischen einer zweiten Feder und dem Gehäuse 0 angeordnet.

Das Volumen an Hydraulikflüssigkeit (Fluid) in der hydraulischen Strecke 53 zwischen dem Geberzylinder 52a und dem Aktor 70 wird in die Speicherkammer bzw. das Fluidreservoir 30 und/oder in eine Kammer zwischen Kolbennehmer 20 und dem schwimmenden Kolben 10 verschoben. Im letztgenannten Fall handelt es sich um eine vollständig innerhalb des Gehäuses 0 ausgebildete Speicherkammer 30, welche sich bildet, wenn der Druck auf der linken Seite des schwimmenden Kolbens 10 höher ist als der Druck auf dessen rechter Seite, also dem am zweiten Anschluss 2 anliegenden Druck. Abhängig von einer Speicherkammerkennlinie 100, die durch die zweite Feder 35 maßgeblich beeinflusst wird kann der externe Fluidspeicher 30 zuerst gefüllt werden oder die interne Speicherkammer 30 zwischen den beiden Kolben 10 und 20. Durch die unterschiedlichen Federn, die im Rahmen dieses Dokuments offenbart werden, kann die Speicherkammerkennlinie für die Aktorbetätigung, aber auch die manuellen Kennlinien der Kupplungsbetätigung, beeinflusst und bestimmt werden. Hierzu können die Federn an den jeweiligen Zweck angepasst werden. Insbesondere können Federn unterschiedlicher Federkonstanten zum Einsatz kommen und/oder Federn mit mit polyvalentem Verhalten, also Federn, die in unterschiedlichen Auslenkungsbereichen unterschiedliche Federkonstanten aufweisen. Die Federn können auf bestimmte Anforderungen ausgelegt sein, beispielsweise auf eine bestimmte manuelle Kennlinie bei der Fahrerbetätigung der Kupplung. Die manuelle Kennlinie kann dabei mehrere Bereiche aufweisen.

Der schwimmende Kolben 10 bildet durch das Teil 14 einen Anschlag am Gehäuse 0a aus und definiert so ein maximales Fluidvolumen, welches zum Nehmerzylinder 52b und damit zur Kupplung 54 geleitet werden kann.

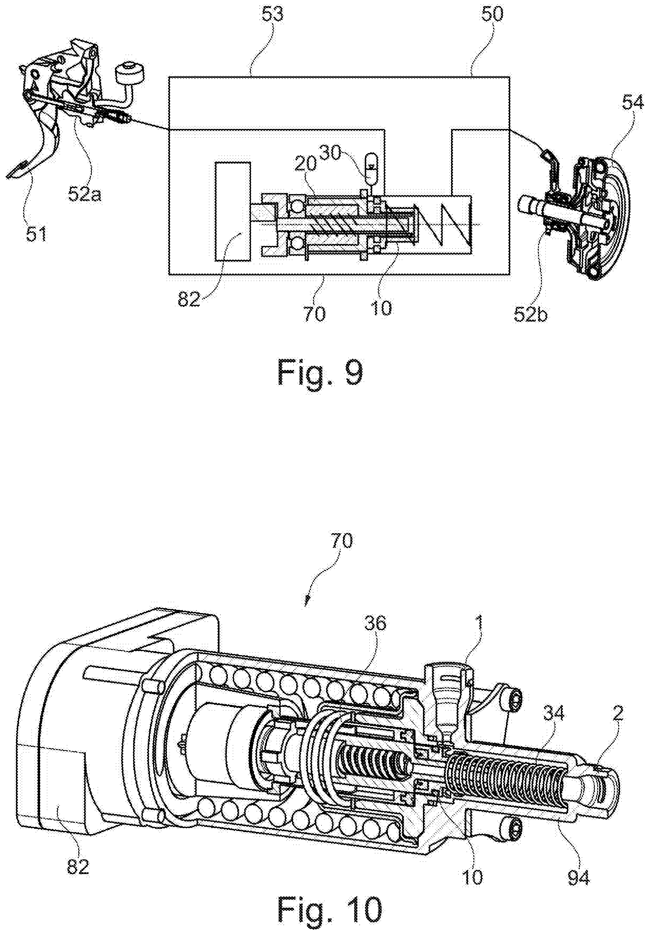

Die Figuren 9 und 10 zeigen ein anderes mögliches Beispiel einer Kupplungsbetätigungsvorrichtung 51 mit einem dazugehörigen Aktor 70 mit einer charakteristischen Speicherkammerkennlinie. Die Anordnung des Aktors 70 innerhalb der Kupplungsbetätigungsvorrichtung 50 entspricht weitgehend der oben bereits beschriebenen Anordnung, so dass auf die obige Beschreibung Bezug genommen wird. Dieses Beispiel weist eine dritte Feder 36 auf. Durch diese dritte Feder 36 wird die Reibung der Nutdichtung 32 und der Dichtung 60 kompensiert. Weiterhin weist das Beispiel eine zweite Feder 35 auf. Diese ist zwischen dem Kolbennehmer 20 und einem hinteren Anschlag 102 des Kolbennehmers 20 angeordnet

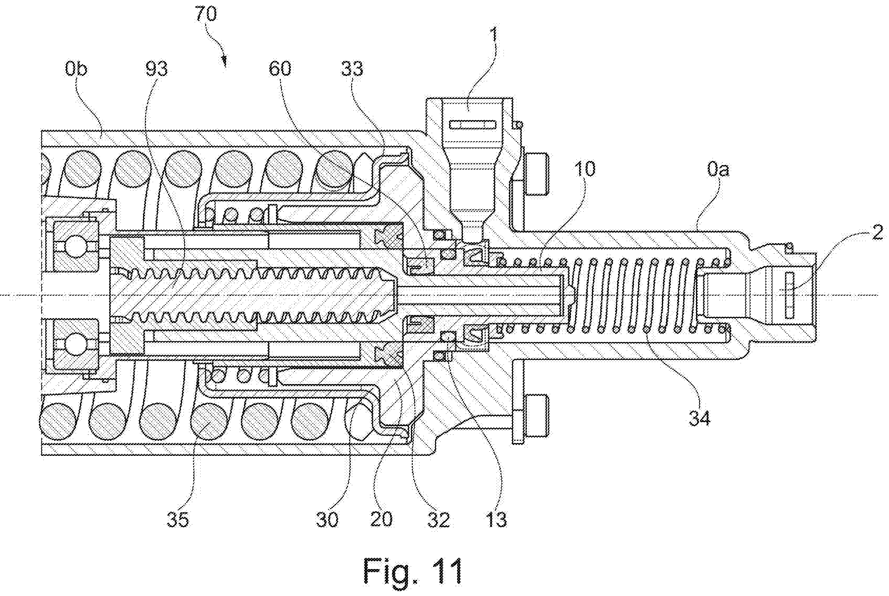

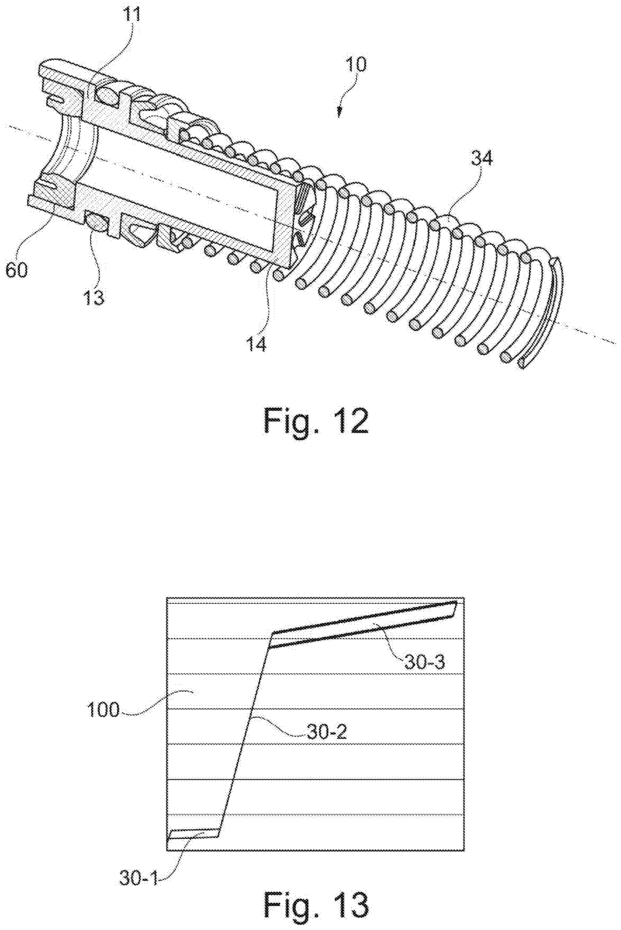

Die Figuren 11 und 12 zeigen einen Querschnitt durch den Aktor 70 und einen Querschnitt durch den schwimmenden Kolben 10 gemäß Figuren 9 und 10. In Fig. 13 ist die Speicherkammerkennlinie 100 dieses Beispiels dargestellt.

Der schwimmende Kolben 10 ist zwischen dem Kolbennehmer 20 und dem zweiten Anschluss 2 angeordnet und bildet zwei unterschiedlich große hydraulische Wirkflächen aus. Die hydraulisch wirksame Fläche auf der linken Seite zwischen Kolben 10 und Kolben 20 ist kleiner als die auf der anderen Seite liegende Wirkfläche, wodurch eine hydraulische Übersetzung ermöglicht wird. Diese Übersetzung ist besonders vorteilhaft um eine Volumenaufnahme des Fluids 101 in die Speicherkammer 30 bei einem unteren Druckniveau zu kompensieren. Mit einem geeigneten Übersetzungsverhältnis kann der Fahrer die Kupplung 54 voll öffnen, obwohl sich die Kupplungsbetätigungsvorrichtung 50 im Übergabebereich zwischen Aktorbetätigung und Fahrerbetätigung befindet, also in der Speicherkammerkennlinie 100 (vgl. Fig. 13) genau im Übergangsbereich zwischen dem zweiten Bereich 30-2 und dem dritten Bereich 30-3. Hier verbleibt ein signifikantes Volumen an Fluid 101 in der Speicherkammer 30, welches nicht zur Betätigung des Nehmerzylinders 52b zur Verfügung steht. Durch die bereitgestellte Übersetzung kann auch in diesem Zustand eine Betätigung der Kupplung 54 beziehungsweise ein Offenhalten der Kupplung 54 erreicht werden, so dass das in der Speicherkammer 30 verbleibende Volumen an Fluid 101 kompensiert werden kann.

Mit dieser Volumenaufnahme-Kompensation ist es dann möglich eine kurze weiche Kennlinie im Anfangsbereich der Speicherkammerkennlinie 100 auszubilden. Diese Speicherkammerkennlinie 100 ist vorteilhaft, da der Fahrer hierdurch deutlicher und einfacher bemerkt, dass sich der die Kupplungsbetätigungsvorrichtung 50 bereits im (motorisch) betätigten Zustand mit aktivem Aktor 70 befindet.

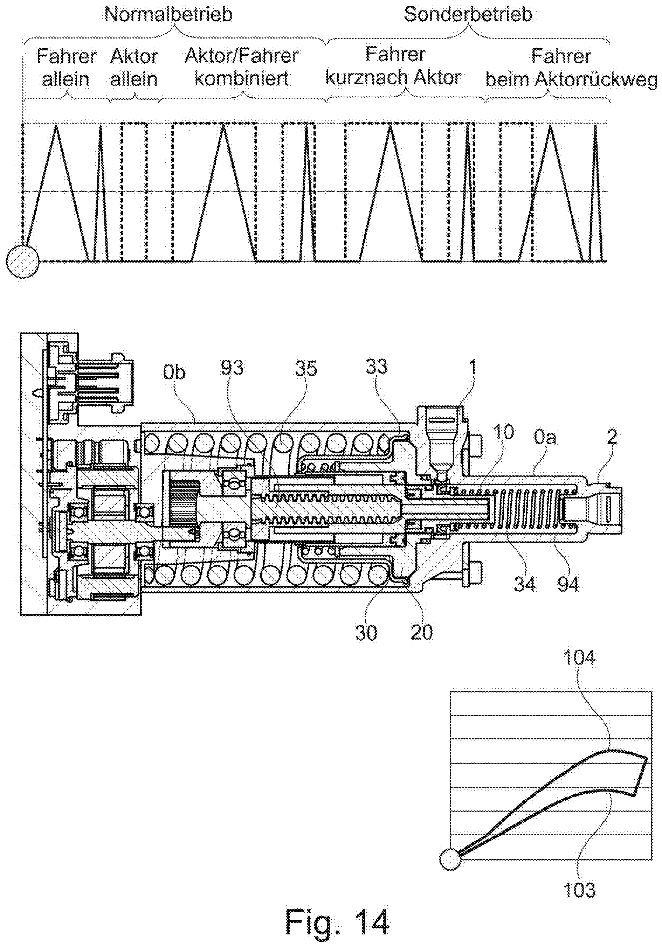

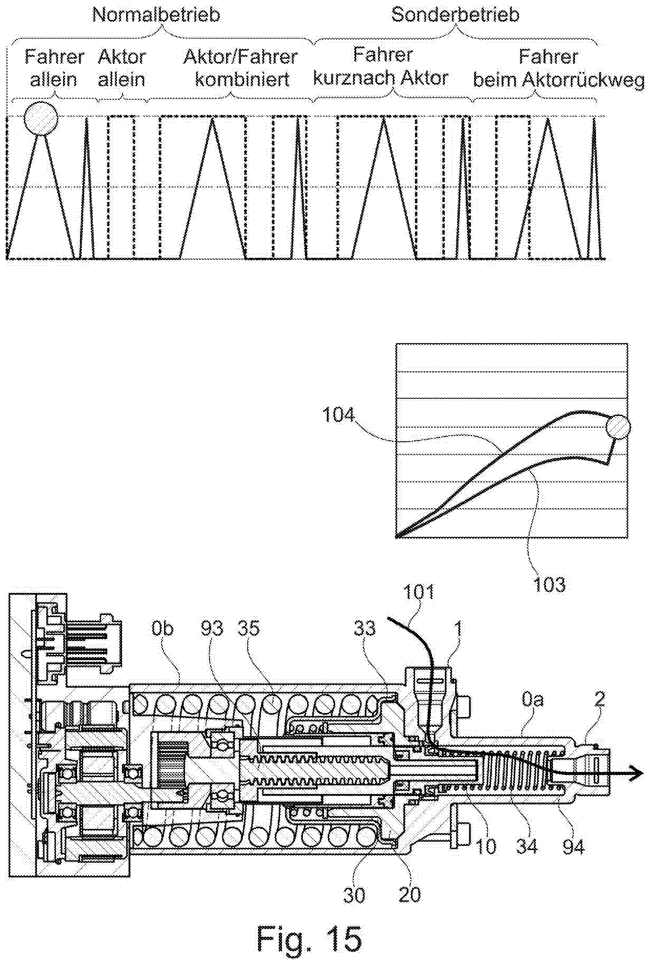

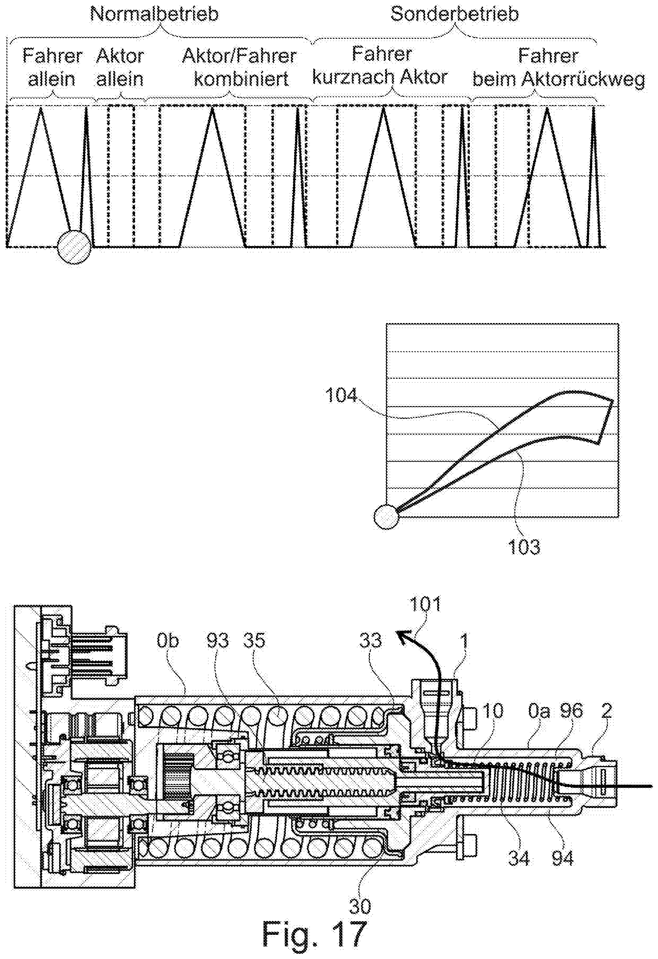

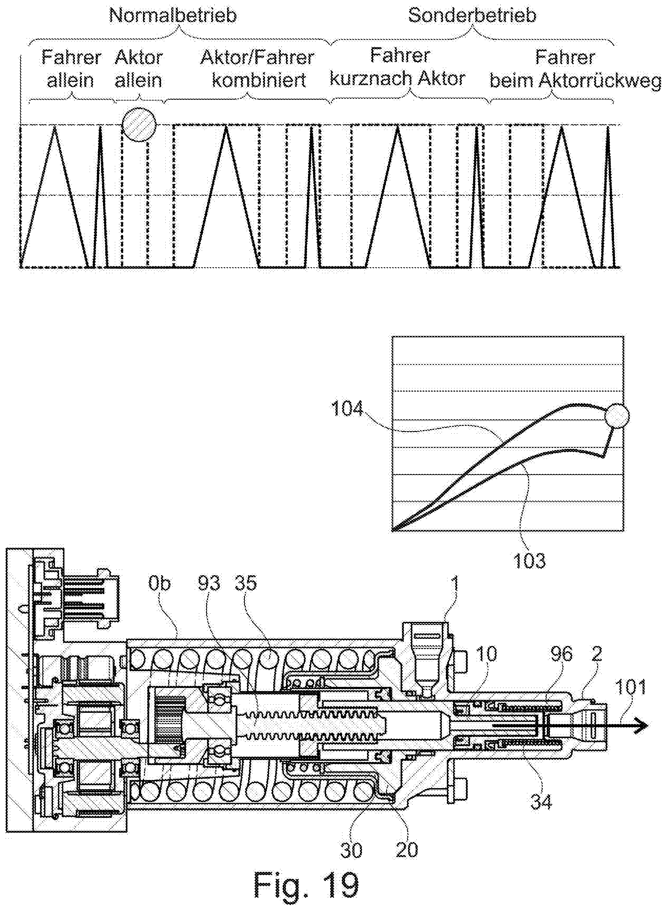

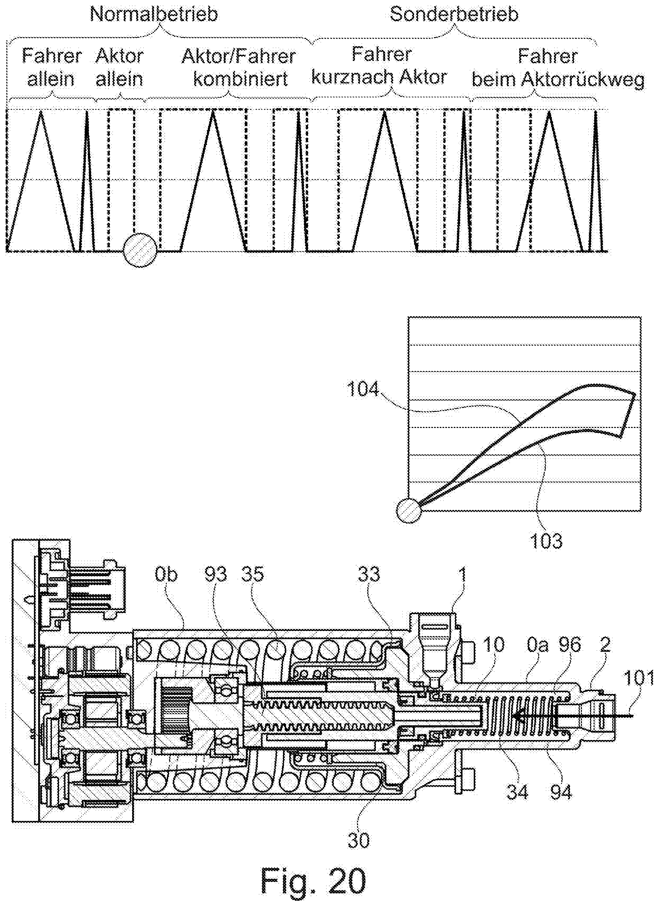

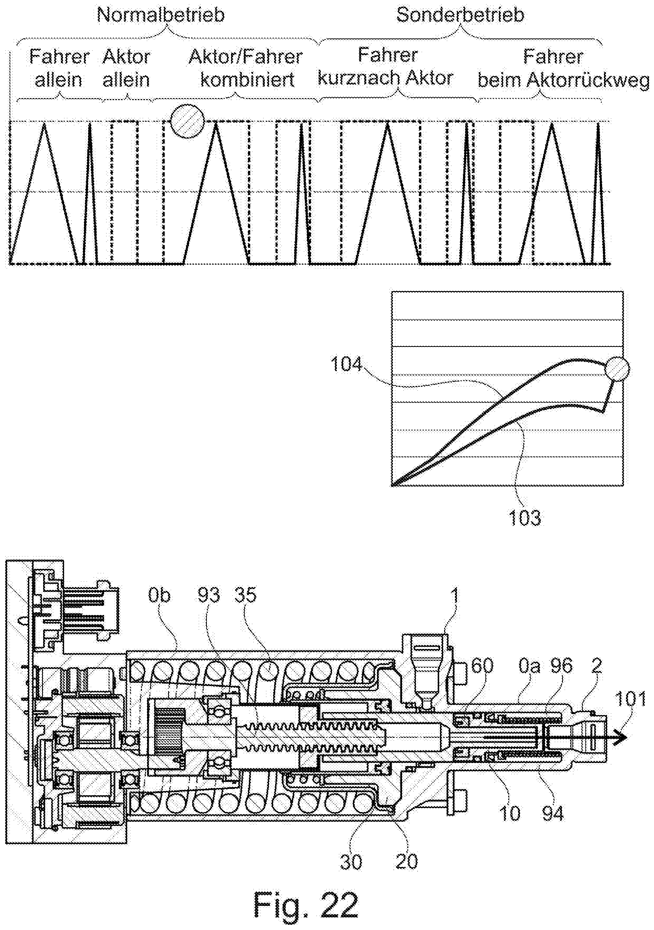

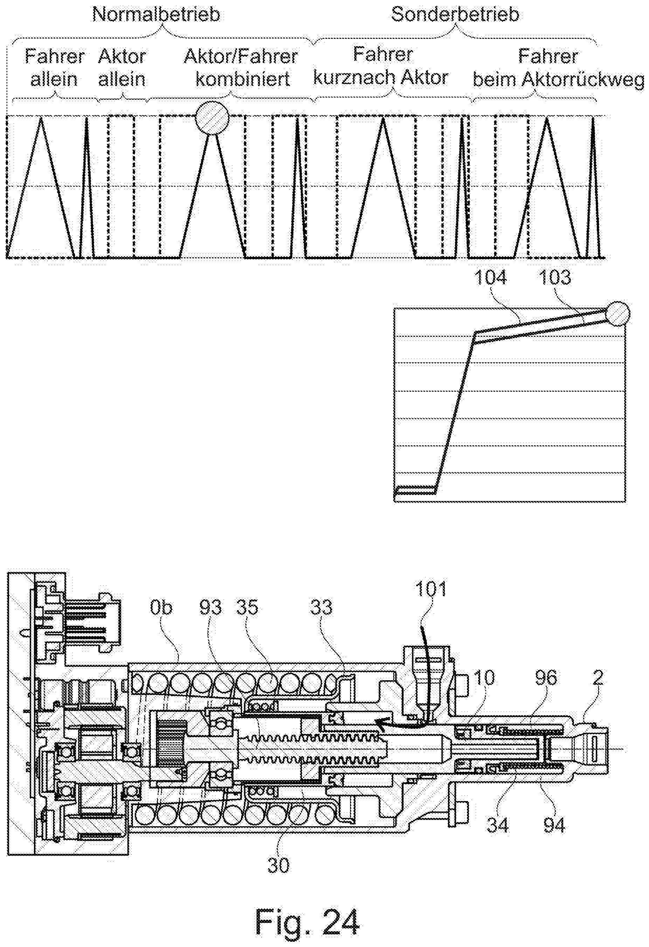

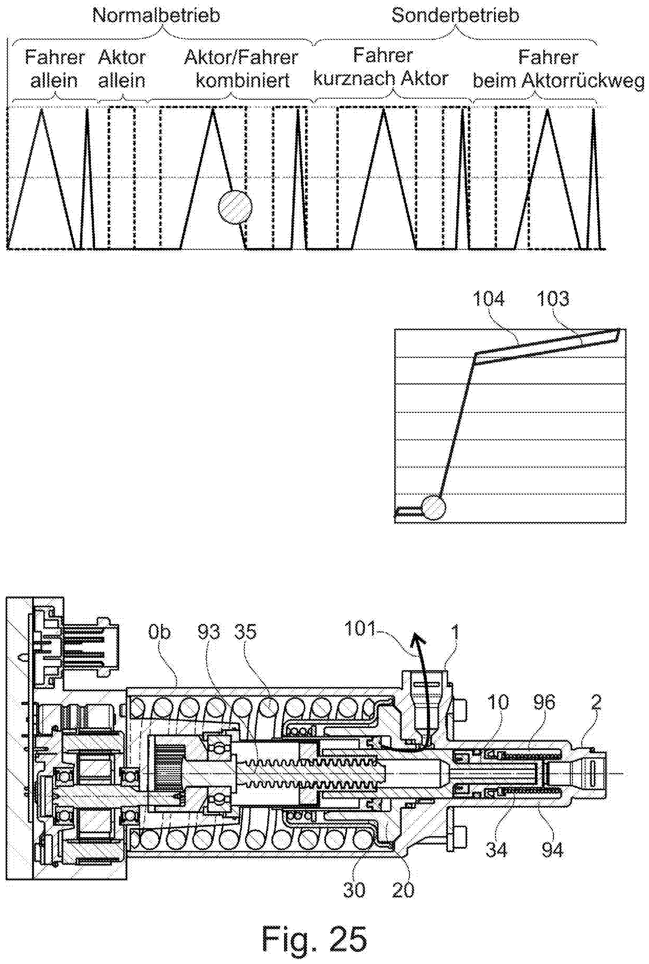

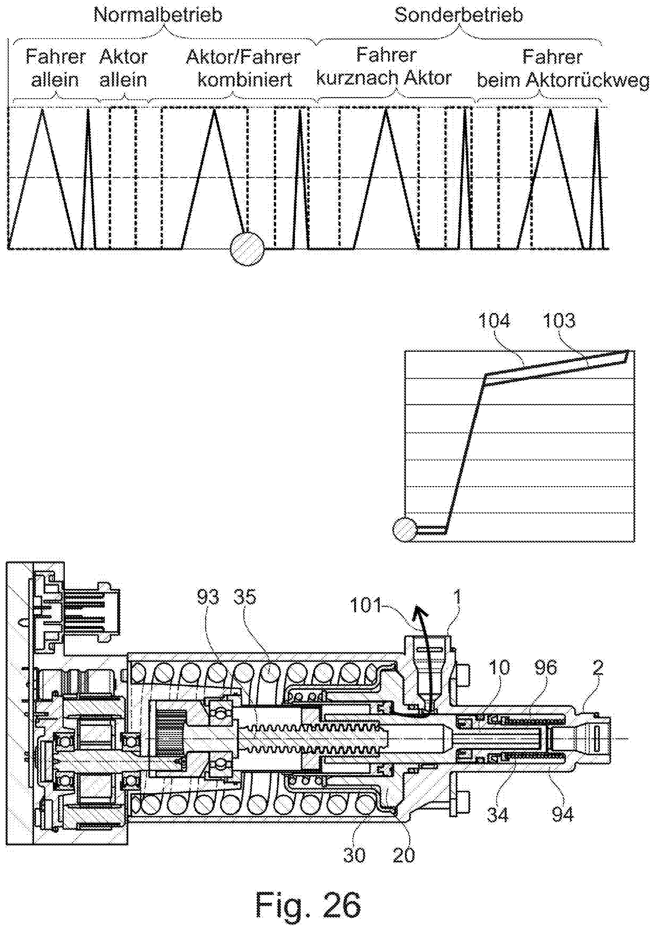

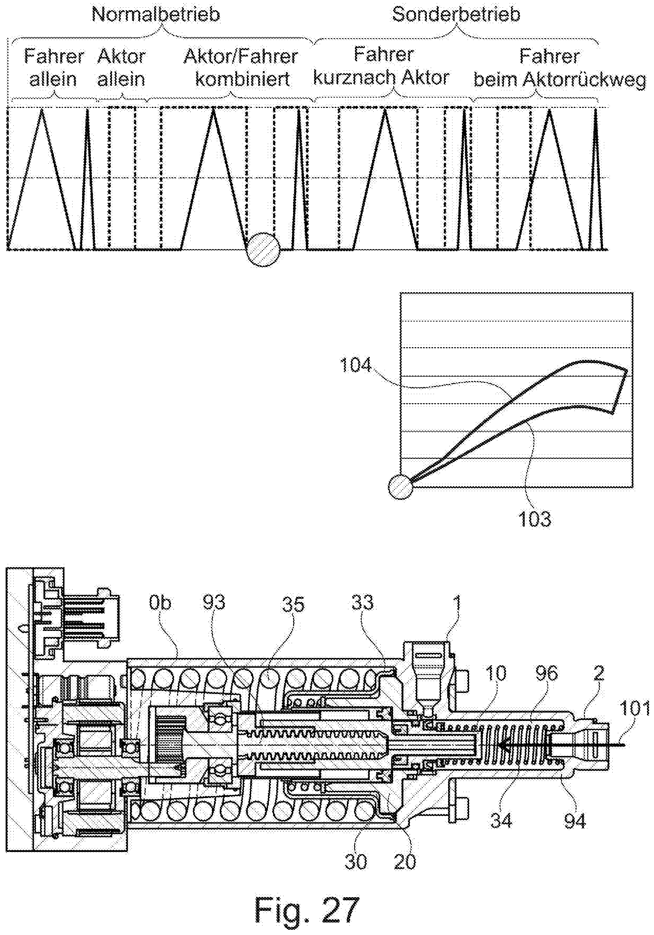

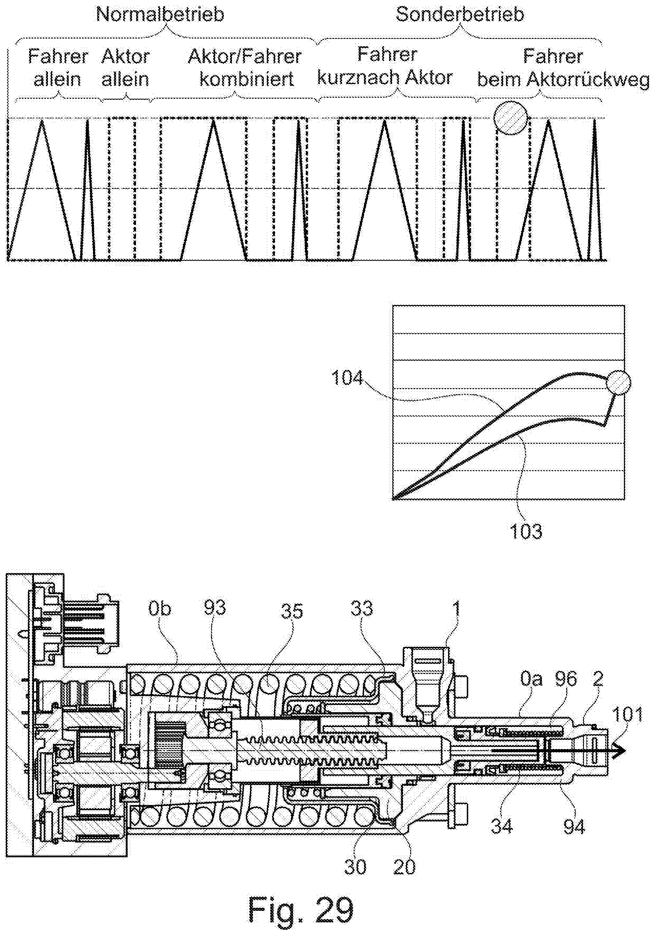

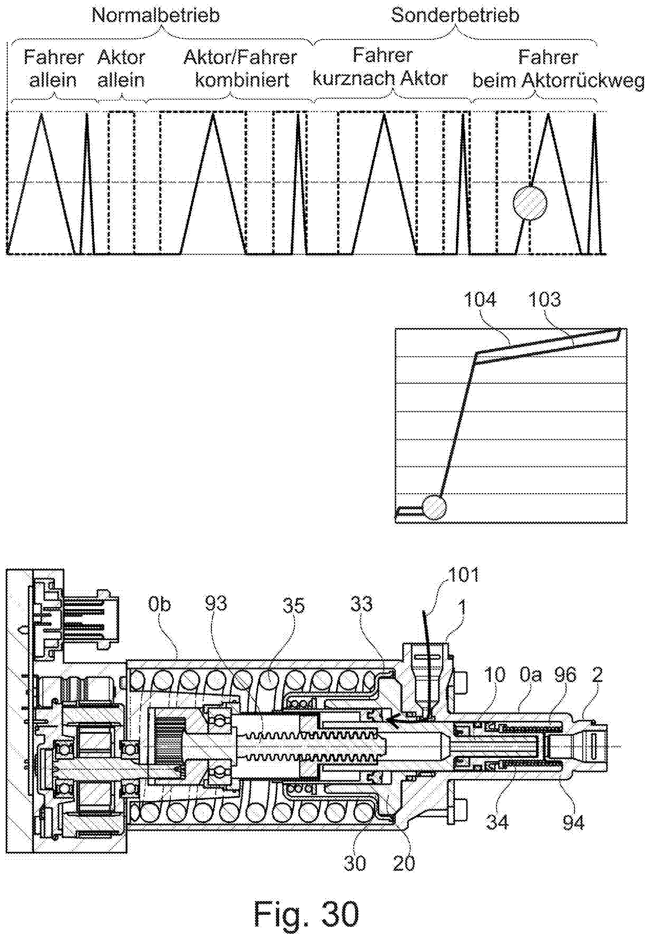

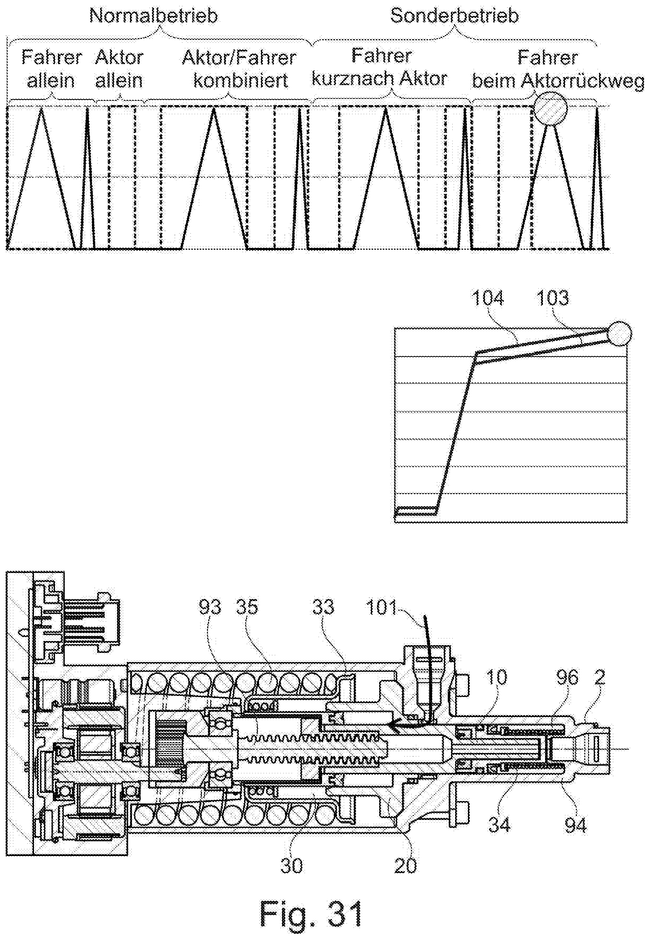

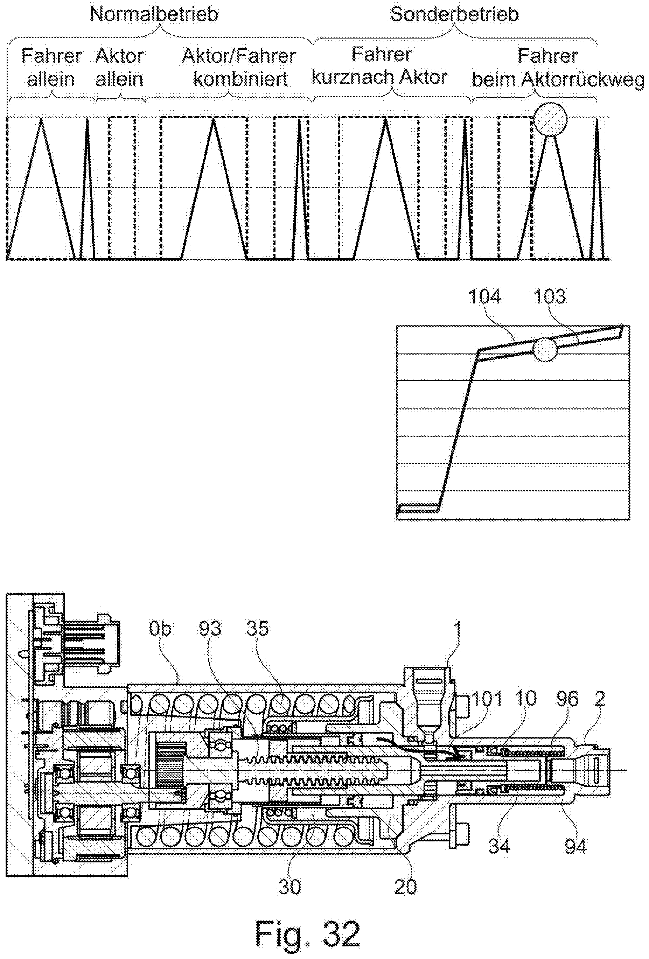

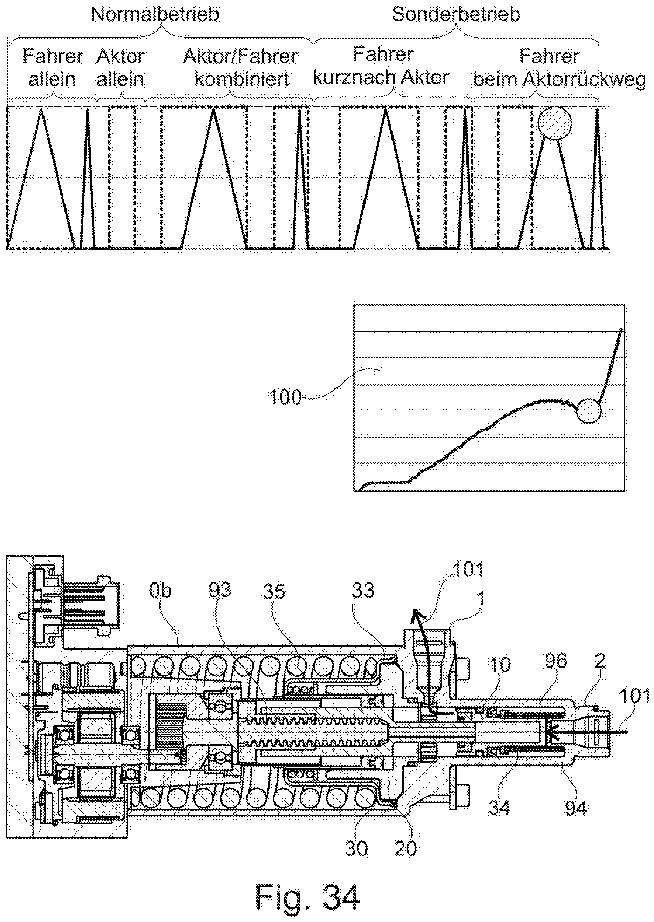

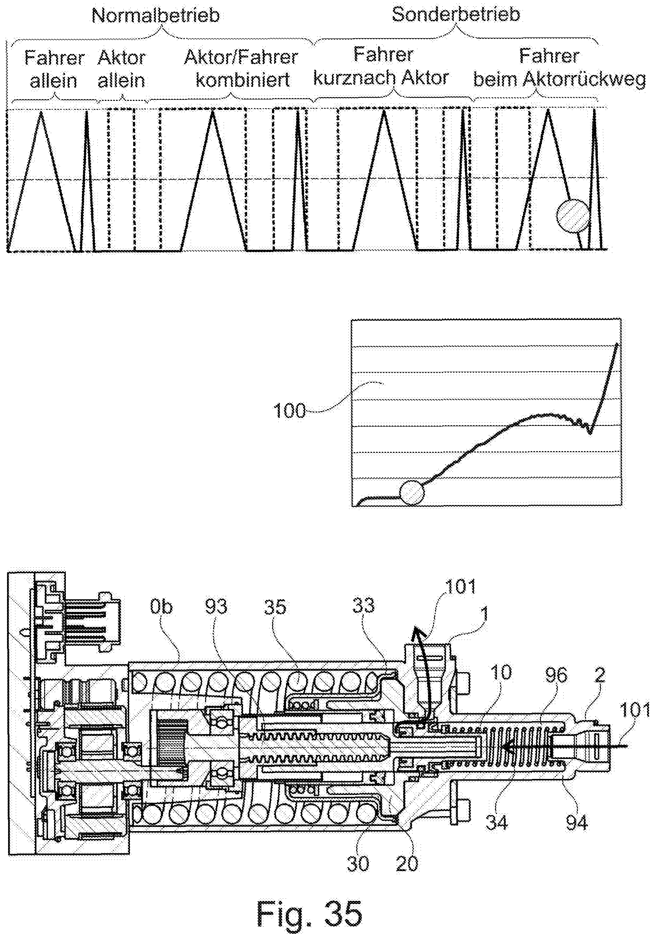

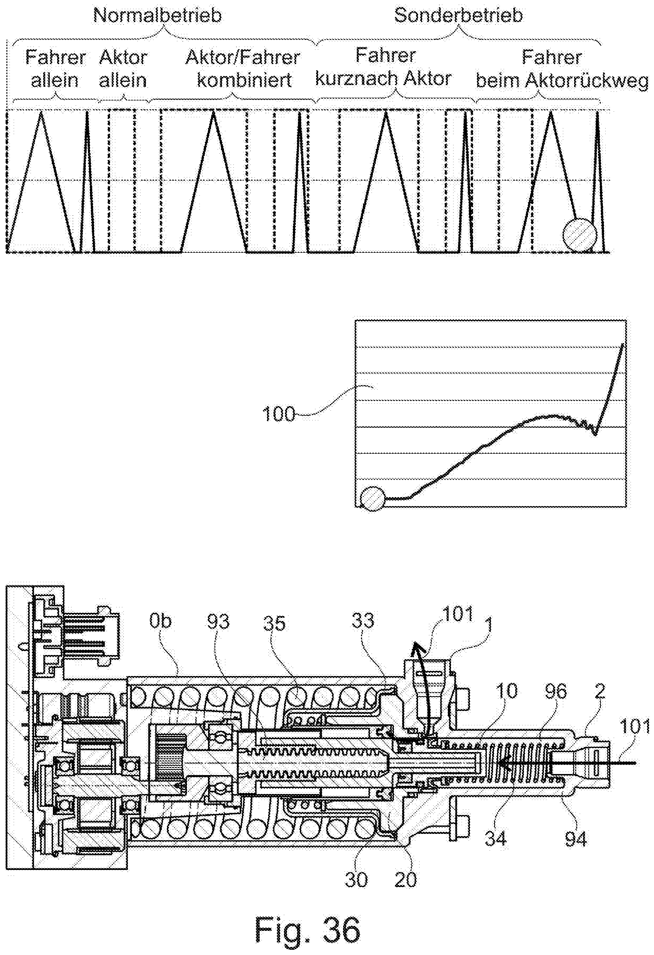

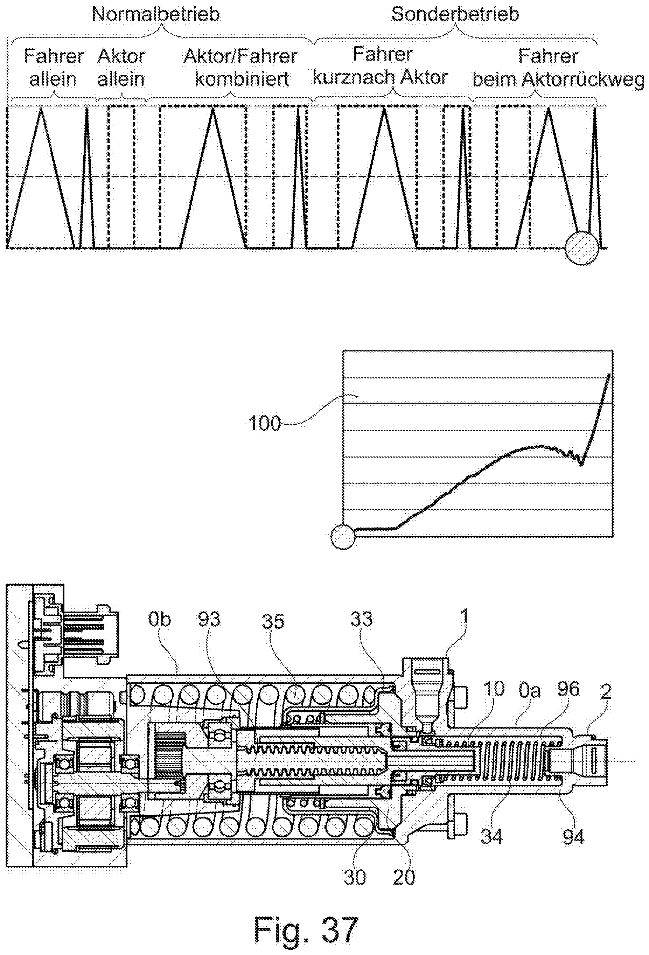

In den Figuren 14 bis 37 sind verschiedene Zustände der Betätigung der Kupplungsbetätigungsvorrichtung 50 gezeigt. Neben einer Ansicht der Kupplungsbetätigungsvorrichtung 50 zeigen die Figuren den jeweiligen Betriebspunkt im Normal- oder Sonderbetrieb, sowie die zugehörige Speicherkammerkennlinie 100 mit dem jeweiligen Betriebspunkt.

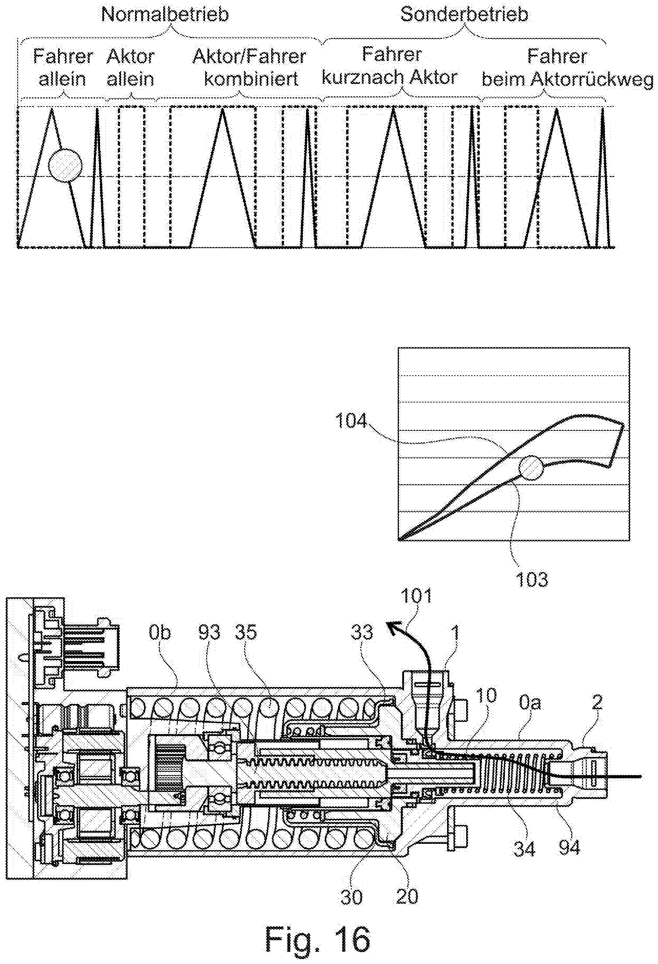

Der schwimmende Kolben 10 ist bei der normalen motorischen Aktorbetätigung vom Kolbennehmer 20 angetrieben (Normalbetrieb). Ohne Aktorbetätigung liegt der schwimmende Kolben10 auf der linke Seite der Schnüffelnnut bzw. Schnüffelnuten 3, sofern mehrere verwendet werden, so dass durch die mindestens eine Schnüffelnut 3 ein Fluidweg zwischen erstem Anschluss 1 und zweitem Anschluss 2 gegeben ist. Der Geberzylinder 52a am Kupplungspedal 51 ist mit dem ersten Anschluss 1 und der Nehmerzylinder 52b für die Kupplungsausrückung ist mit dem zweiten Anschluss 2 verbunden. Wenn der Fahrer das Kupplungspedal betätigt wird das gedrückte, d.h. mit Druck beaufschlagte Fluid 101 dem direkten Weg vom ersten Anschluss1 über die Schnüffelnut 3 bis zum zweiten Anschluss 2 folgen. Dies ist in den Figuren 14 bis 15 gezeigt, während die Figuren 16 bis 17 die Änderung vom betätigten Zustand in den unbetätigten Zustand zeigen.

Im durch den Aktor 70 unbetätigten Zustand ermöglicht ein Abdichtungselement (zum Beispiel ein O-Ring) 13 beim Kolbenweg 0 eine Abdichtung gegen das Gehäuse 0b. Auf diese Weise wird die Speicherkammer bzw. das Fluidreservoir 30 geschlossen. Diese Anordnung ermöglicht eine reduzierte Volumenaufnahme bei reiner FahrerBetätigung (ohne Aktorbetätigung).

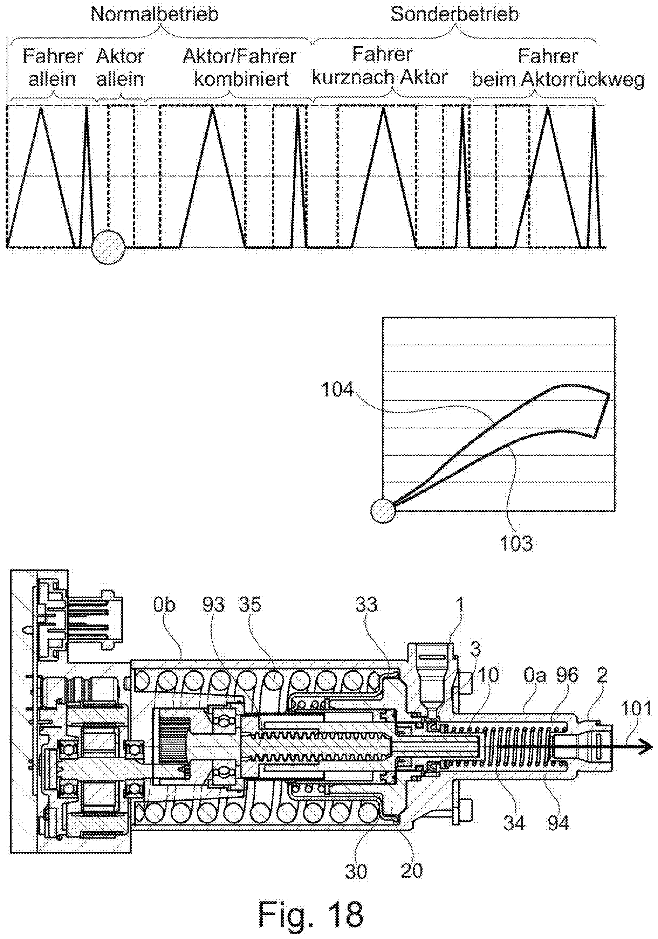

Die Figuren 18 bis 20 zeigen den Zustand mit einer Betätigung alleine durch den Aktor 70 bei verschiedenen Zuständen. Dieses ist z.B. beim so genannten "Segeln" der Fall. Unter Segeln wird hier eine Betriebsweise des Kraftfahrzeugs verstanden, bei der das Kraftfahrzeug rollt und die Kupplung geöffnet ist, also keine Verbindung zwischen Motor und Antriebsstrang besteht.

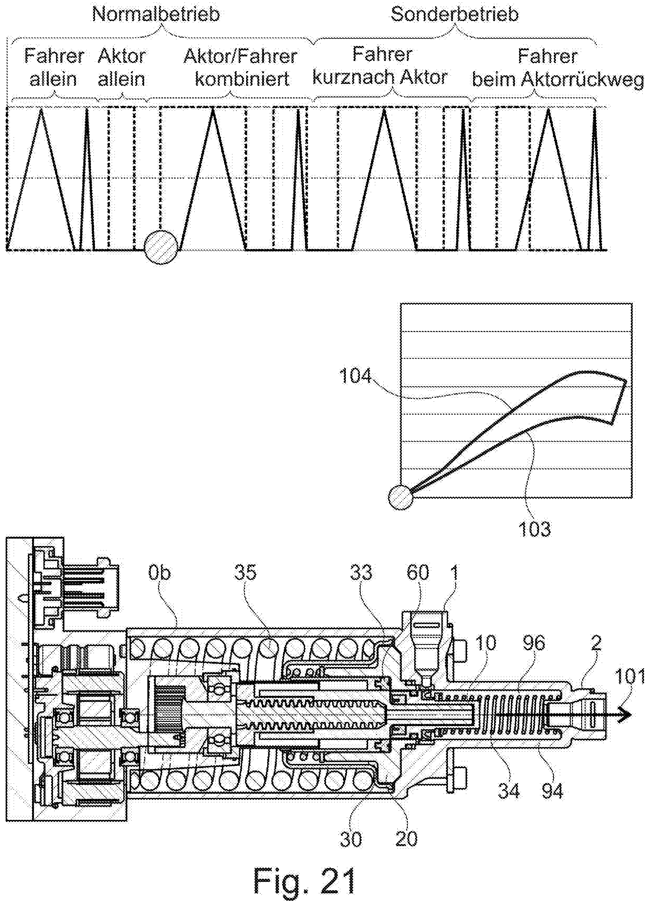

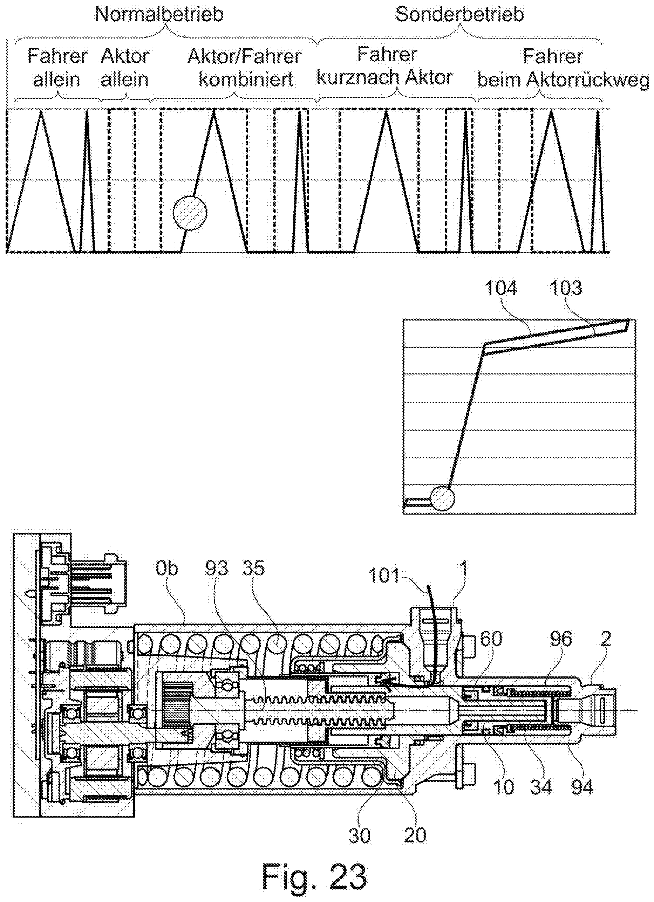

Die Figuren 21 bis 27 zeigen eine kombinierte Betätigung durch den Aktor 70 und den Fahrer über den Geberzylinder 52a in verschiedenen Betriebspunkten. Bei der Fahrerbetätigung nach der Betätigung durch den Aktor 70 ist der erste Anschluss 1 nicht mehr mit der vorderen Druckkammer 96, die zwischen Kolben 10 und zweitem Anschluss 2 ausgebildet ist, verbunden, sondern mit der Speicherkammer 30 (vgl. insbesondere Fig. 23).

Das Volumen an Fluid aus dem Geberzylinder 52a wird in die Speicherkammer 30 verschoben und/oder in eine Kammer zwischen Kolbennehmer 20 und Kolben 10. Eine Dichtung 60 bildet eine Hohlkammer, so dass die wirksame hydraulische Fläche kleiner ist als die Fläche auf der rechten Seite des schwimmenden Kolbens 10. Die Speicherkammerkennlinie 100 besteht aus drei Bereichen, wie auch in Figur 13 gezeigt und oben diskutiert. In der dort gezeigten Grafik sind vertikal der Druck und horizontal der Weg aufgetragen, wie auch in allen anderen gezeigten Darstellungen von Speicherkammerkennlinien 100. Ein kurzer weicher erster Bereich 30-1 ist durch die zweite Feder 35 und die dritte Feder 36 realisiert. Eine steile, quasi vertikale Rampe kennzeichnet den zweiten Bereich 30-2. Dieser "harte" Bereich wird bestimmt durch die Steifigkeit der hydraulischen Seite, die beispielsweise durch das Zusammenwirken der Nutdichtung 32 mit dem Gehäuse 0 oder die mechanische Steifigkeit des Topfs 33 bestimmt wird. Schließlich besteht noch ein dritter Bereich 30-3, der mit der vorgespannten Feder 34 quasi als Überdruckbegrenzer realisiert ist. Die erste Feder 34 ist als konventionelle Druckfeder dargestellt. Es ist aber auch möglich, eine Tellerfeder oder eine andere elastische Komponente als Feder 34 einzusetzen. Aufgrund des weichen ersten Bereichs 30-1 der Speicherkammerkennlinie 100 erhält der Fahrer einen haptischen Hinweis, dass der Aktor 70 schon betätigt ist.

Die hydraulische Übersetzung am Kolben 10 zwischen der rechten und linken Seite ermöglicht eine Volumenreduzierung des in die Speicherkammer 30 umgeleiteten Fluids 101 und kompensiert im ersten Bereich 30-1 auf diese Weise zumindest teilweise den durch das in die Speicherkammer 30 geleitete Fluid 101 erzeugten Volumenverlust.

Die hydraulische Übersetzung ergibt eine Druckerhöhung im Geberzylinder 52a im Vergleich zum Druck im Nehmerzylinder 52b. Der Druck in der Speicherkammer 30 liegt im dritten Bereich 30-3 hoch genug, um eine Kupplungsbetätigung insbesondere -Öffnung zu bewirken. Der schwimmende Kolben10 bildet mit dem Abschnitt 14 mit dem Gehäuse 0a einen Anschlag. Auf diese Weise ist es möglich, ein fest vorgegebenes maximales Volumen an Fluid in den Nehmerzylinder 52b zu schieben. Die erste Feder 34 stellt sicher, dass im niedrigen unteren Druckbereich der schwimmende Kolben 10 nach links verschoben wird und dieser dabei den Reibungswiderstand, beispielsweise der Dichtungen, überwindet.

Das Fluidreservoir beziehungsweise die Speicherkammer 30 wird dabei in Bezug auf ihr Volumen in Abhängigkeit vom maximalen Druck des Nehmerzylinders 52b ausgelegt, so dass der dritte Bereich 30-3 der Speicherkammerkennlinie 100 nur erreicht wird, wenn sich der schwimmende Kolben 10 im Anschlag befindet. Dadurch wird erreicht, dass auch in dieser Situation die Fahrerbetätigung Priorität hat.

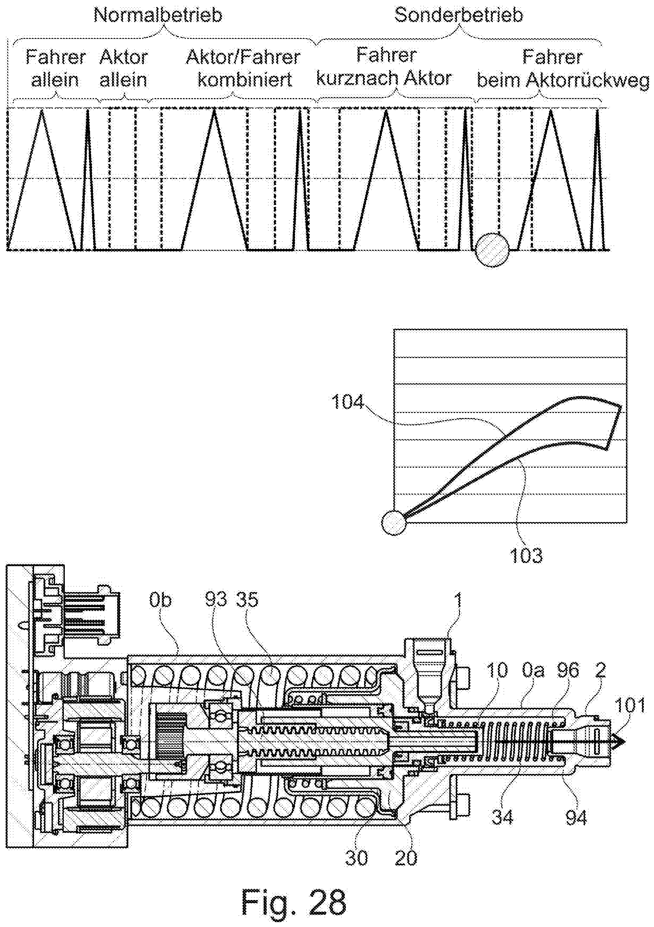

Die Figuren 28 bis 37 zeigen eine anhaltende Betätigung durch den Fahrer auch nach der motorischen Rückstellung des Aktors nach links in die unbetätigte Ausgangslage in verschiedenen Betriebspunkten.

Der Druck aus dem Fluidreservoir 30 wird dabei langsam abgebaut und Fluid 101 gelangt in die vordere Druckkammer 96 um so die Kupplung 54 weiter zu betätigen. Erst nach einer Betätigung durch den Fahrer wird dieser Druck wieder abgebaut, wobei zuletzt ein Fluid 101 aus dem Fluidreservoir 30 zum Geberzylinder 52a strömt, so dass das Verhalten dem Druck der weicheren Feder entspricht.

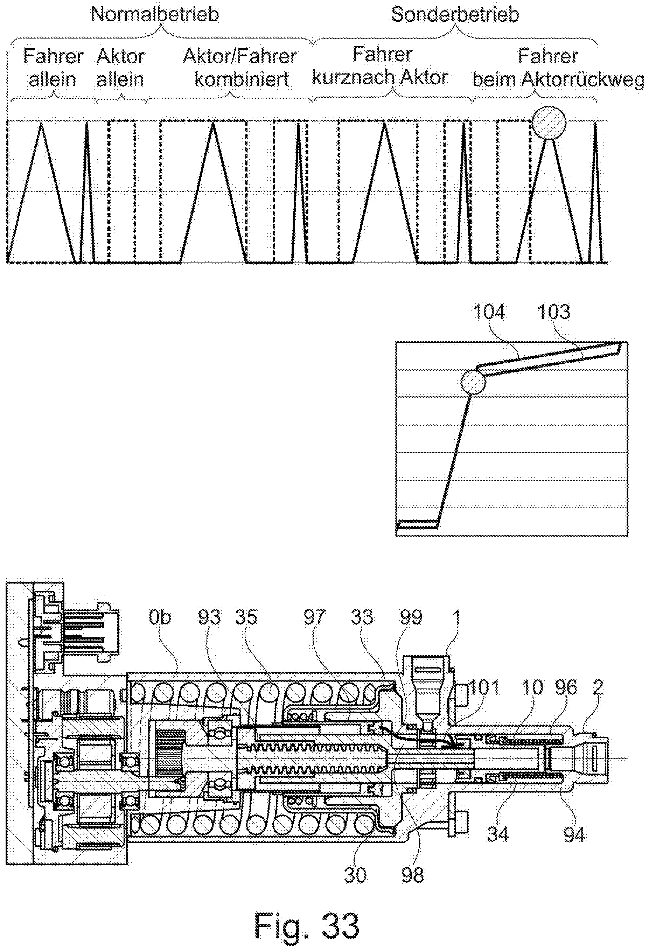

In Fig. 33 ist exemplarisch ein dritter Druckraum 98 als Fluidreservoir zwischen der zweiten Feder 35 und dem Gehäuse des Kolbennehmers 20 ausgebildet gezeigt. Ferner ist in diesem Beispiel in hinterer Druckraum 97 gezeigt, der durch einen Spalt 99 mit dem dritten Druckraum 98 verbunden ist, so dass hinterer Druckraum 97 und dritter Druckraum 98 auf gleichem Druck liegen. Der Spalt 99 habe dabei eine Breite von weniger als 0,3 mm.

Ein solches System kann ohne wesentliche Anpassung des Gesamtsystems im Fahrzeug als Add-On Modul implementiert werden, also in bereits bestehende Systeme als Kupplungsbetätigungsvorrichtung 50 eingebracht werden.

Für den Fahrer ist es insbesondere nach einer gewissen Eingewöhnungszeit leicht, die unterschiedlichen Speicherkammerkennlinien am Kupplungspedal 51 erkennen und so sicher zwischen den verschiedenene Aktorzuständen beziehungsweise Betriebspunkten zu unterscheiden. Gleichzeitig ist zu jeder Zeit eine Kontrollübernahme durch den Fahrer möglich. Schließlich ist auch die Volumenaufnahme an Fluid 101 kompensiert und damit reduziert.

### Bezugszeichenliste

- 0: Gehäuse
- 0a: erster Gehäuseabschnitt
- 0b: zweiter Gehäuseabschnitt
- 1: erster Anschluß
- 2: zweiter Anschluß
- 3: Schnüffelnut
- 10: Kolben (schwimmend)
- 13: Abdichtelement (O-Ring)
- 14: Abschnitt (des schwimmenden Kolben)
- 20: Kolbennehmer
- 30: Fluidreservoir / Speicherkammer
- 30-1: erster Bereich
- 30-2: zweiter Bereich
- 30-3: dritter Bereich
- 32: Dichtung
- 33: Topf
- 34: erste Feder
- 35: zweite Feder
- 50: Kupplungsbetätigungsvorrichtung
- 51: Kupplungspedal
- 52a: Geberzylinder
- 52b: Nehmerzylinder (CSC concentric slave cylinder/Zentralausrücker)
- 53: Hydraulische Strecke
- 54: Kupplung / Reibungskupplung
- 60: Dichtung
- 70: Aktor
- 80: erste Druckleitung
- 81: zweite Druckleitung
- 82: Motor
- 90: axiale Richtung
- 93: Welle
- 94: Zylinder
- 96: vorderer Druckraum / vordere (Druck-)Kammer
- 97: hinterer Druckraum / hintere (Druck-)Kammer
- 98: dritter Druckraum / dritte (Druck-)Kammer
- 99: Spalt
- 100: Druckanstiegskennlinie/Speicherkammerkennlinie
- 101: Fluid
- 102: hinterer Anschlag des Kolbennehmers
- 103: erste manuelle Kennlinie
- 104: zweite manuelle Kennlinie

## Patentansprüche

1. Kupplungsbetätigungsvorrichtung (50), insbesondere ein Ausrücksystem für eine Reibungskupplung (54) eines Kraftfahrzeugs, mit einem Geberzylinder (52a) und einem Nehmerzylinder (52b) sowie einem Aktor (70) über den Geberzylinder (52a) und Nehmerzylinder (52b) mit einer Druckleitung (80, 81) verbunden sind, wobei der Aktor (70) eine durch einen Motor (82) rotierbare Welle (93) aufweist mit mindestens einem auf der Welle (93) axial beweglich angeordneten Kolben, **dadurch gekennzeichnet, dass** der Kolben in Form eines Kolbennehmers (20) und eines zweiten darauf beweglich angeordneten Kolben in Form eines schwimmenden Kolbens (10), die in einem gemeinsamen Zylinder (94) entlang der axialen Richtung (90) verfahrbar sind ausgestaltet ist, wobei eine hintere Druckkammer bzw. Speicherkammer (30) zwischen dem Kolbennehmer (20) und schwimmendem Kolben (10) gebildet werden kann und eine vordere Druckkammer (96) zwischen dem schwimmendem Kolben (10) und einer Stirnwand des Zylinders (94) angeordnet ist; wobei eine erste Feder (34) den schwimmenden Kolben (10) und die Stirnwand verbindet, wobei ein erster Anschluss (1) für eine erste Druckleitung (80) zum Geberzylinder (52a) in die hintere Druckkammer mündet, wenn sich der schwimmende Kolben (10) in einer betätigten Position befindet während sich der Kolbennehmer (20) in einer unbetätigten Position befindet und ein zweiter Anschluss (82) für eine zweite Druckleitung (81) zum Nehmerzylinder (52b) in die vordere Druckkammer (96) mündet, wobei die erste Druckleitung (80) durch den schwimmenden Kolben (10) verschließbar ist, wenn sich dieser in einer unbetätigten Position befindet.

2. Kupplungsbetätigungsvorrichtung (50) nach Anspruch 1, **gekennzeichnet durch** einen dritten Druckraum als Fluidreservoir (30) zwischen einer zweiten Feder (35) und dem Gehäuse (0b) des Kolbennehmers (20), wobei das Fluidreservoir (30) in einer betätigten Position des schwimmenden Kolbens (10) mit der ersten Druckleitung (80) verbunden ist und geeignet ist Fluid (101) bei Betätigung des Geberzylinders (52a) aus der ersten Druckleitung (80) aufzunehmen.

3. Kupplungsbetätigungsvorrichtung (50) nach Anspruch 2, **dadurch gekennzeichnet, dass** die zweite Feder (35) zwischen einem Gehäuse (0b) des Kolbennehmers (20) und einem hinteren Anschlag des Kolbennehmers (20) angeordnet ist.

4. Kupplungsbetätigungsvorrichtung (50) nach einem der vorherigen Ansprüche, **gekennzeichnet durch** eine Verbindung durch den hinteren Druckraum und das Fluidreservoir (30), die fluidisch geöffnet ist, wenn sich der schwimmende Kolben (10) in einer betätigten Position und sich der Kolbennehmer (20) in einer unbetätigten Position befindet oder von einer betätigten Position in eine unbetätigte Position verlagert wird.

5. Kupplungsbetätigungsvorrichtung (50) nach einem der vorigen Ansprüche, **gekennzeichnet durch** eine dritte Feder (36) zwischen der zweiten Feder (35) und dem Fluidreservoir (30), wobei die dritte Feder (36) eine kleinere Federkonstante als die zweite Feder (35) aufweist und bei einem Eintritt von Fluid (101) in das Fluidreservoir (30) vor der zweiten Feder ausgelenkt wird, so dass ein erster Druckwiderstand am Kupplungspedal (51) des Geberzylinders (52a) für einen Fahrer spürbar wird und bei einer anschließenden weiteren Auslenkung der zweiten Feder (35) oder eines Zwischenelements wenigstens ein zweiter Druckwiderstand spürbar ist, welcher vom ersten verschieden ist, so dass der Fahrer durch die unterschiedlichen Druckwiderstände erkennt, dass sich der schwimmende Kolben (10) in einer betätigten Position befindet.

6. Verfahren zur Betätigung einer Kupplungsvorrichtung (50) mit einem hydraulisch wirkenden Nehmerzylinder (52b), **dadurch gekennzeichnet, dass** der Nehmerzylinder (52b) wahlweise durch einen hydraulisch verbundenen, manuell betätigten Geberzylinder (52a) oder einen motorisch betriebenen Aktor (70) betätigt wird, und dass bei einer gleichzeitigen manuellen und motorischen Betätigung ein manuell druckbeaufschlagter Anteil eines Fluids (101) in eine volumenveränderliche Speicherkammer (30) umgeleitet wird.

7. Verfahren nach Anspruch 6, **dadurch gekennzeichnet, dass** die Speicherkammer (30) bei einer Zuleitung des manuell druckbeaufschlagten Fluids (101) eine erste manuelle Kennlinie (103) aufweist, die von einer zweiten manuellen Kennlinie (104), welche bei einer ausschließlich manuellen Betätigung der Kupplungsbetätigungsvorrichtung (50) ohne Umleitung von Hydraulikflüssigkeit (101) in die Speicherkammer (30) eingehalten wird, abweicht.

8. Verfahren nach Anspruch 7, **dadurch gekennzeichnet, dass** die erste manuelle Kennlinie (103) unterhalb der zweiten manuellen Kennlinie (104) verläuft.

## Claims

1. Clutch actuating device (50), in particular a disengagement system for a friction clutch (54) of a motor vehicle, having a master cylinder (52a) and a slave cylinder (52b) as well as an actuator (70) via which the master cylinder (52a) and the slave cylinder (52b) are connected to a pressure line (80, 81), wherein the actuator (70) has a shaft (93) which can be rotated by a motor (82), with at least one piston which is arranged in an axially movable fashion on the shaft (93), **characterized in that** the piston is configured in the form of a piston slave (20) and a second piston arranged in a movable fashion thereon in the form of a floating piston (10), which pistons can be moved in a common cylinder (94) along the axial direction (90), wherein a rear pressure chamber or storage chamber (30) can be formed between the piston slave (20) and the floating piston (10), and a front pressure chamber (96) is arranged between the floating piston (10) and an end wall of the cylinder (94); wherein a first spring (34) connects the floating piston (10) and the end wall, wherein a first port (1) for a first pressure line (80) leading to the master cylinder (52a) opens into the rear pressure chamber when the floating piston (10) is in an actuated position while the piston slave (20) is in an unactuated position, and a second port (82) for a second pressure line (81) leading to the slave cylinder (52b) opens into the front pressure chamber (96), wherein the first pressure line (80) can be closed off by the floating piston (10) when the latter is in an unactuated position.

2. Clutch actuating device (50) according to Claim 1, **characterized by** a third pressure space as a fluid reservoir (30) between a second spring (35) and the housing (0b) of the piston slave (20) wherein in an actuated position of the floating piston (10) the fluid reservoir (30) is connected to the first pressure line (80) and is suitable for receiving fluid (101) from the first pressure line (80) when the master cylinder (52a) is actuated.

3. Clutch actuating device (50) according to Claim 2, **characterized in that** the second spring (35) is arranged between a housing (0b) of the piston slave (20) and a rear stop of the piston slave (20).

4. Clutch actuating device (50) according to one of the preceding claims, **characterized by** a connection through the rear pressure space and the fluid reservoir (30), which connection is fluidically opened when the floating piston (10) is in an actuated position and the piston slave (20) is in an unactuated position or is moved from an actuated position into an unactuated position.

5. Clutch actuating device (50) according to one of the preceding claims, **characterized by** a third spring (36) between the second spring (35) and the fluid reservoir (30), wherein the third spring (36) has a smaller spring constant than the second spring (35), and when fluid (101) enters the fluid reservoir (30) in front of the second spring said third spring (36) is deflected, with the result that a first pressure resistance at the clutch pedal (51) of the master cylinder (52a) can be felt by a driver, and in the case of a subsequent further deflection of the second spring (35) or of an intermediate element at least one second pressure resistance can be felt which is different from the first, with the result that the driver detects, as a result of the different pressure resistances, that the floating piston (10) is in an actuated position.

6. Method for actuating a clutch device (50) having a hydraulically acting slave cylinder (52b), **characterized in that** the slave cylinder (52b) is optionally actuated by a hydraulically connected, manually actuated master cylinder (52a) or a motor-operated actuator (70), and **in that** in the event of simultaneous manual and motor-operated actuation a portion of a fluid (101) to which pressure is applied manually is diverted into a storage chamber (30) with a variable volume.

7. Method according to Claim 6, **characterized in that** when the fluid (101) to which pressure is applied manually is fed in, the storage chamber (30) has a first manual characteristic curve (103) which deviates from a second manual characteristic curve (104) which is complied with in the event of exclusively manual actuation of the clutch actuation device (50) without diversion of hydraulic fluid (101) into the storage chamber (30).

8. Method according to Claim 7, **characterized in that** the first manual characteristic curve (103) extends below the second manual characteristic curve (104).

## Revendications

1. Dispositif d'actionnement d'embrayage (50), en particulier un système de débrayage d'un embrayage à friction (54) d'un véhicule automobile, comprenant un maître-cylindre (52a) et un cylindre récepteur (52b) ainsi qu'un actionneur (70) qui relie le maître-cylindre (52a) et le cylindre récepteur (52b) à un conduit de pression (80, 81), l'actionneur (70) comprenant un arbre (93) pouvant être entraîné en rotation par un moteur (82) et comportant au moins un piston disposé de manière mobile axialement sur l'arbre (93), **caractérisé en ce que** le piston est configuré sous la forme d'un récepteur de piston (20) et d'un deuxième piston, disposé de manière mobile sur celui-ci et se présentant sous la forme d'un piston flottant (10), qui sont déplaçables dans un cylindre commun (94) le long de la direction axiale (90), une chambre de pression arrière ou chambre d'accumulation (30) pouvant être formée entre le récepteur de piston (20) et le piston flottant (10) et une chambre de pression avant (96) étant disposée entre le piston flottant (10) et une paroi d'extrémité du cylindre (94) ; un premier ressort (34) reliant le piston flottant (10) et la paroi d'extrémité, un premier raccord (1) destiné à un premier conduit de pression (80), qui mène au maître-cylindre (52a), débouchant dans la chambre de pression arrière lorsque le piston flottant (10) est dans une position actionnée tandis que le récepteur de piston (20) est dans une position non actionnée et un deuxième raccord (82) destiné à un deuxième conduit de pression (81), qui mène au cylindre récepteur (52b), débouchant dans la chambre de pression avant (96), le premier conduit de pression (80) pouvant être fermé par le piston flottant (10) lorsque celui-ci est dans une position non actionnée.

2. Dispositif d'actionnement d'embrayage (50) selon la revendication 1, **caractérisé par** une troisième chambre de pression servant de réservoir de fluide (30) disposé entre un deuxième ressort (35) et le boîtier (0b) du récepteur de piston (20), le réservoir de fluide (30) étant relié au premier conduit de pression (80) dans une position activée du piston flottant (10) et étant adapté pour recevoir du fluide (101) du premier conduit de pression (80) lors de l'actionnement du maître-cylindre (52a).

3. Dispositif d'actionnement d'embrayage (50) selon la revendication 2, **caractérisé en ce que** le deuxième ressort (35) est disposé entre un boîtier (0b) du récepteur de piston (20) et une butée arrière du récepteur de piston (20).

4. Dispositif d'actionnement d'embrayage (50) selon l'une des revendications précédentes, **caractérisé par** une liaison qui passe à travers la chambre de pression arrière et le réservoir de fluide (30) et qui est ouverte de manière fluidique lorsque le piston flottant (10) est dans une position actionnée et que le récepteur de piston (20) est dans une position non actionnée ou est déplacé d'une position actionnée à une position non actionnée.

5. Dispositif d'actionnement d'embrayage (50) selon l'une des revendications précédentes, **caractérisé par** un troisième ressort (36) situé entre le deuxième ressort (35) et le réservoir de fluide (30), le troisième ressort (36) ayant une constante de ressort inférieure à celle du deuxième ressort (35) et étant dévié avant le deuxième ressort lorsque du fluide (101) pénètre dans le réservoir de fluide (30), de sorte qu'une première résistance à la pression sur la pédale d'embrayage (51) du maître-cylindre (52a) devienne perceptible par le conducteur et que, lors d'une déviation supplémentaire ultérieure du deuxième ressort (35) ou d'un élément intermédiaire, au moins une deuxième résistance à la pression, différente de la première, devienne perceptible de sorte que le conducteur détecte par les différentes résistances à la pression que le piston flottant (10) est dans une position actionnée.

6. Procédé d'actionnement d'un dispositif d'embrayage (50) comprenant un cylindre récepteur hydraulique (52b), **caractérisé en ce que** le cylindre récepteur (52b) est actionné sélectivement par un maître-cylindre (52a) actionné manuellement et raccordé hydrauliquement ou par un actionneur motorisé (70), et **en ce que** lors d'un actionnement manuel et d'un actionnement motorisé simultanés, une partie d'un fluide (101), qui est mise sous pression manuellement, est redirigée dans une chambre d'accumulation à volume variable (30).

7. Procédé selon la revendication 6, **caractérisé en ce que**, lors de l'amenée du fluide (101) mis sous pression manuellement, la chambre d'accumulation (30) présente une première caractéristique manuelle (103) qui diffère d'une deuxième caractéristique manuelle (104) qui est respectée lors d'un actionnement exclusivement manuel du dispositif d'actionnement d'embrayage (50) sans dérivation du fluide hydraulique (101) dans la chambre d'accumulation (30).

8. Procédé selon la revendication 7, **caractérisé en ce que** la première caractéristique manuelle (103) s'étend au-dessous de la deuxième caractéristique manuelle (104).
